# EUROPÄISCHE PATENTSCHRIFT

(11) **EP 4 158 228 B1**
(45) Veröffentlichungstag und Bekanntmachung des Hinweises auf die Patenterteilung: **27.08.2025**
(21) Anmeldenummer: 21727418.2
(22) Anmeldetag: 17.05.2021
(51) Int. Cl.: F16K 3/03, G02B 5/00, G03B 9/06

(54) **VERSCHLUSSMECHANISMUS**
CLOSURE MECHANISM
MÉCANISME DE FERMETURE

(30) Priorität: 25.05.2020 DE 102020113979
(43) Veröffentlichungstag der Anmeldung: 05.04.2023
(73) Patentinhaber: Bayerische Motoren Werke Aktiengesellschaft, 80809 München (DE)
(72) Erfinder: VIEHBACHER, Gerhard, 85757 Karlsfeld (DE)
(86) Internationale Anmeldenummer: PCT/EP2021/063002
(87) Internationale Veröffentlichungsnummer: WO 2021/239493

(56) Entgegenhaltungen:
- CN-B- 105 605 238
- KR-A- 20200 032 306

## Beschreibung

Die Erfindung betrifft einen Verschlussmechanismus für eine durch ein Zentrum und einen Außenrand definierte Öffnung.

Insbesondere betrifft die Erfindung einen blendenartigen, insbesondere irisblendenartigen Verschlussmechanismus.

Blendenartige Verschlussmechanismen sind weithin bekannt, beispielsweise bei Irisblenden, wie sie in Fotoobjektiven realisiert sind. Hier sind dünne, plattenförmige Segmente aufeinanderliegend positioniert, die sich relativ zueinander durch einen angetriebenen Ring nach innen, das heißt zum Zentrum, oder nach außen bewegen lassen, um die Öffnung mehr oder weniger weit zu schließen. Aufgrund der Tatsache, dass die Segmente übereinander liegen, kann das Zentrum nicht komplett geschlossen werden, es bleibt immer eine punktförmige Öffnung. Solche Irisblenden sind darüber hinaus nicht dafür ausgelegt, in axialer Richtung (axiale Richtung ist im Folgenden die zur Öffnungsebene senkrechte Richtung) auftretenden Kräften entgegenzuwirken. Das bedeutet, solche Irisblenden sind nicht geeignet, um beispielsweise als Verschlussventil in einer Strömung zu wirken.

Darüber hinaus gibt es jedoch auch andere irisartige Verschlussmechanismen mit Segmenten, die in einer Ebene liegen, das heißt, nicht wie bei einer Fotoblende übereinander positioniert sind. Diese Konzepte bestehen üblicherweise aus mehreren, im Wesentlichen in Dreiecksform ausgeführten Segmenten, die an ihrem Außenumfang an einer Linearführung gelagert sind. Jedes Segment hat seine eigene Linearführung, und die Linearführungen stehen zu benachbarten Linearführungen in spitzen Winkeln. Die einzelnen Segmente werden dann möglichst mittels eines gemeinsamen Antriebs längs ihrer Linearführungen nach außen gefahren. Die Blendenöffnung kann dabei, ähnlich wie bei der Fotoblende, stufenlos im Querschnitt verstellt werden. Die Segmente schließen an das jeweilige Nachbarsegment mit ihren Seitenflächen, von der Spitze ausgehend, an. Das Problem dabei ist, dass die für einen klemmfreien und robusten, leichtgängigen Bewegungsablauf notwendigen Schlittenlängen oft aus Platzgründen nicht realisiert werden können. Zwar können Wälzführungen anstatt von Gleitführungen hier Vorteile bringen, jedoch tritt dann das Problem der zunehmenden Schmutzempfindlichkeit bei Wälzführungen auf, die einen Einsatz dieses Verschlussmechanismus in Umgebungen, in denen Flüssigkeiten, Feststoffe oder teigartige Stoffe durch den geöffneten Verschlussmechanismus hindurchgeführt werden, erschweren oder unmöglich machen. Ferner sind diese Anordnungen mit den zahlreichen Linearführungen kostenintensiv. Darüber hinaus besteht hier das Problem darin, dass die Segmente sich gegenseitig sehr leicht verklemmen können, da sie an den Seitenflächen aneinanderdrücken, um eine Dichtigkeit zu erreichen. Das heißt, hier kommt es oft zur Kraftübertragung zwischen benachbarten Segmenten.

Darüber hinaus ist aus der EP 2 988 044 A1 ein Verschlussmechanismus in Form einer Art Irisblende offenbart, bei dem die Segmente von ihrem (bezogen auf den geschlossenen Zustand) Mittelpunkt aus eine erste, sichelförmig konvexe Seitenfläche sowie eine in die entgegengesetzte Richtung blickende, konkave sichelförmige Seitenfläche haben. Sämtliche Segmente sind gleich aufgebaut, sodass im geschlossenen Zustand des Verschlussmechanismus jedes Segment mit seiner konvexen Seitenfläche in die komplementär geformte konkave Seitenfläche des benachbarten Segments eindringt. Mit dieser Form der Segmente ist es möglich, Segmente mit jeweils einem, einem Segment zugeordneten Schwenkpunkt zu versehen und die Segmente um ihren zugeordneten Schwenkpunkt nach außen und nach innen zu schwenken. Dieser Verschlussmechanismus ist sehr stabil und wird als Ventil eingesetzt, welches zum Beispiel Rohrleitungen abschließen kann, in denen Flüssigkeiten, breiförmige Stoffe oder Feststoffe strömen. Beim Öffnen ergibt sich zu Beginn keine zentrale, kreisförmige Öffnung, vielmehr gehen Schlitze von der zentralen Öffnung bis zum äußeren Umfangsrand aus, da gleich zu Beginn des Öffnungsvorgangs die konvexen Seitenflächen von ihren konkaven Seitenflächen beabstandet werden. Der Öffnungsquerschnitt wird folglich für den Strömungsverlauf ungünstig aufgrund dieser zusätzlichen Schlitze, die der Öffnung eine Sternform geben.

Die KR 2020 0032306 A2 beschreibt einen Verschlussmechanismus, mit mehrerne Segmenten, die in einer in das Zentrum gefahrenen Schließstellung gemeinsam die Öffnung verschließen und in einer zum Außenrand verfahrenden Öffnungsstellung gemeinsam die Öffnung freilegen. Jedes Segment hat einen eigenen Schwenkhebel. Alle Schwenkhebel sind an einer scheibenförmigen, äußeren Basis angelenkt, die um eine Zentrum der zu verschließenden Öffung drehbar ist. Die Segmente haben jeweils an einer inneren, scheibenförmigen Basis, die die Öffnung begrenzt, einen Anlenkpunkt in Form einer Schwenkachse. Mit Drehen der äußeren Basis zur inneren Basis werden die Segmente in die Öffnung geschwenkt oder aus ihr heraus.

Ein hierzu ähnlicher Verschlussmechanismus ist aus der CN 105 605 238 B bekannt.

Aufgabe der Erfindung ist es, einen neuartigen Verschlussmechanismus zu schaffen, der sich dadurch auszeichnet, dass er äußerst schmutzunempfindlich ist, nicht zum Klemmen der Segmente neigt und sich zusätzlich fast oder komplett schließen lässt. Der Verschlussmechanismus nach der Erfindung soll vom Konzept heraus in der Lage sein, universell eingesetzt zu werden, das heißt, auch als Ventil bei zähfließenden oder teigigen Stoffen, die hindurchströmen, zuverlässig zu arbeiten. Ferner soll der Verschlussmechanismus möglichst geringe Betätigungshübe zwischen dem komplett offenen und komplett geschlossenen Zustand aufweisen, damit er schnell betätigt werden kann.

Vorteilhafte Ausgestaltungen sollen realisierbar sein, bei denen die Öffnung stufenlos im Querschnitt verstellt werden kann. Ferner soll gemäß einer Variante die zentrale Öffnung nahezu kreisförmig und ohne Schlitze zwischen benachbarten Segmenten ausgeführt sein. Außerdem ist es wünschenswert, wenn die Öffnung mit dem Verschlussmechanismus im geschlossenen Zustand fluidund/oder gasdicht verschlossen, also abgedichtet, werden kann.

Der erfindungsgemäße Verschlussmechanismus umfasst
- mehrere Segmente, die in einer in das Zentrum gefahrenen Schließstellung gemeinsam die Öffnung verschließen und in einer zum Außenrand verfahrenden Öffnungsstellung gemeinsam die Öffnung freilegen, erste und zweite Schwenkhebel sowie eine erste und eine zweite Basis, wobei
- jedes Segment ein Mittelteil eines eigenen Viergelenks ist und einen ersten und einen zweiten Anlenkpunkt hat,
- am ersten Anlenkpunkt ein erster Schwenkhebel schwenkbar am zugeordneten Segment angebracht ist, der außerhalb des Außenrandes an der ersten Basis schwenkbar angebracht ist, und
- am zweiten Anlenkpunkt ein zweiter Schwenkhebel am zugeordneten Segment angebracht ist, der über ein Kurvengetriebe mit der ersten Basis beweglich mechanisch gekoppelt ist und der außerhalb des Außenrandes an der zweiten Basis schwenkbar angebracht ist, und
- die erste Basis und die zweite Basis relativ zueinander beweglich sind und die Relativbewegung eine Antriebsbewegung für die Schwenkhebel bildet.

Die erfindungsgemäße Lösung sieht vor, dass jedes Segment ein zentraler Abschnitt, das heißt das mittlere Glied (hier auch "Mittelteil" genannt) eines eigenen Viergelenks ist und damit zwei ihm eigens zugeordnete Schwenkhebel, nämlich den ersten und den zweiten Schwenkhebel miteinander koppelt. Die Bewegung des zweiten Schwenkhebels erfolgt über ein Kurvengetriebe, wobei die Kontur der entsprechenden Steuerkurve das Ergebnis der gewünschten Bewegung des Segments ist. Das bedeutet, die Steuerkurve errechnet sich aus der vorgegebenen Geometrie der Segmente und der Schwenkhebel, deren Anlenkpunkten sowie der gewünschten Bewegungsbahn. Umgekehrt bedeutet dies, dass jedes Segment zu jedem Augenblick während des Öffnungs- und des Schließvorgangs eine vorgegebene Position durch die Zwangssteuerung im Viergelenk hat, sodass es nicht zum Klemmen, Blockieren oder Verkanten der benachbarten Segmente kommen kann. Die Segmente müssen sich auch nicht wie im Stand der Technik gegenseitig antreiben oder Kraft aufeinander ausüben, um den Verschlussmechanismus zu öffnen oder zu schließen, denn die Segmente bewegen sich unabhängig voneinander und synchron. Der Antrieb erfolgt durch eine Relativbewegung zwischen der ersten und zweiten Basis, das heißt, normalerweise wird entweder die erste oder die zweite Basis bewegt, insbesondere um das Zentrum gedreht, und die jeweils andere Basis kann dann stillstehen. Somit erfolgt die Verschiebung aller Segmente durch ein einziges Bauteil, wodurch die synchrone Bewegung sehr leicht realisiert werden kann und keine unnötigen Toleranzfehler auftreten können.

Die Steuerkurve nach der Erfindung ist vorzugsweise nicht linear, sondern ist teilweise oder über ihre Wirklänge bogenförmig, vorzugsweise stetig gekrümmt.

Ein weiterer Vorteil der Erfindung besteht darin, dass der Verschlussmechanismus mit der gesamten Mechanik um die Öffnung herum sehr schmal baut. Die Segmente fahren nicht einfach tangential nach außen, wie dies im vorgenannten Stand der Technik der Fall ist, sondern bewegen sich entlang einer gekrümmten Bahn, die allenfalls abschnittsweise linear sein kann, wobei insbesondere jedoch beim vollständigen Öffnen aufgrund der beiden Schwenkhebel und des Kurvengetriebes die Bewegungsbahn gekrümmt ist, die ein platzsparendes "Ineinanderschachteln" der Segmente am Ende des Öffnungsvorgangs um die Öffnung herum ermöglicht. Darüber hinaus kann der Verschlussmechanismus mit sehr geringen Hüben geöffnet und geschlossen werden. Durch Drehbewegungen der ersten oder der zweiten Basis um weniger als 90°, insbesondere sogar weniger als 35°, ist es bereits möglich, den Verschlussmechanismus vom vollständig geschlossenen in den vollständig offenen Zustand zu überführen, wie Prototypen zeigen.

Die Segmente müssen auch nicht zwingend an den Seitenflächen aneinander anliegen, sie können es jedoch optional, um eine optimale Fluiddichtigkeit zu erreichen.

Da die Bewegungen der Segmente selbst immer über Schwenkpunkte erfolgen, ist üblicherweise auch keine Gefahr eines Festsetzens der Einzelteile möglich, wie dies bei den Linearführungen der Fall ist. Als Antriebe für die jeweils angetriebene Basis kommen Zahnrad-, Zahnriemen-, Spindel-, elektrische, pneumatische und/oder hydraulische Antriebe infrage, das heißt, jede Art von Antrieben.

Der erfindungsgemäße Verschlussmechanismus kann auch komplett aus Kunststoff gefertigt sein und damit sehr leicht ausgeführt werden, da die Konstruktion insgesamt robust ist.

Die erste und/oder die zweite Basis können als um das Zentrum beweglicher Ring ausgebildet sein, das bedeutet als Kreisring oder als beliebig anders geformter Ring, der lediglich durch die Öffnung, die geschlossen und geöffnet werden muss, in seiner Form eingeschränkt und vorbestimmt ist. Vorzugsweise ist nur die erste oder die zweite Basis beweglich, die jeweils unbewegliche Basis wird üblicherweise an einem Gehäuse befestigt.

Die Einsatzmöglichkeiten für den erfindungsgemäßen Verschlussmechanismus sind unbegrenzt. Der Verschlussmechanismus nach der Erfindung kann als Ventil eingesetzt werden, um Öffnungen, auch strömungsdurchflossene Öffnungen, zu schließen und/oder Strömungen zu regulieren, beispielweise in der Lebensmittelverarbeitung oder in Brauereien, Kraftwerken, Industrieanlagen, Raffinerien, Klärwerken, in denen allgemein Fluide unterschiedlichster Viskosität sowie Öl, Gas, Wasser, Dampf, aber auch teigige, breiartige, pulverförmige oder granulare Substanzen oder auch Schüttgut transportiert, portioniert oder im Volumenstrom reguliert werden müssen bzw. muss. Der erfindungsgemäße Verschlussmechanismus kann auch als Verschluss für einen Abfallsammelbehälter verwendet werden, beispielsweise auf einem Abfalleimer, oder er kann integriert in eine Küchenarbeitsfläche sein, wobei unter der Öffnung dann ein Behälter angeordnet sein kann. Er kann als Verschlussmechanismus für einen Wäscheeinwurfschacht verwendet werden, als Sicherheitsabdeckung auf einer Herdplatte, als Verschluss in Möbel eingesetzt werden, oder in optischen Geräten, bei Dachkuppeln oder Fenstern und Haustüren.

Um Teile zu sparen und die Bewegung der angetriebenen der beiden Basen eindeutig zu machen, kann der bewegte Ring an der jeweils anderen Basis geführt sein. Ist beispielsweise die erste Basis der bewegte Ring, kann dieser Ring an der zweiten Basis geführt sein oder umgekehrt. Diese Führung kann beispielsweise durch eine zwischen der ersten und zweiten Basis ausgebildete Drehlagerung realisiert werden, sodass keine weiteren Gehäuseteile oder dergleichen notwendig sind.

Ein Beispiel für eine solche Drehlagerung besteht darin, dass zwischen der ersten und der zweiten Basis zumindest eine Kulissenführung ausgebildet ist. Diese Kulissenführung ist aber eine Kulissenführung für die Bewegung von erster und zweiter Basis zueinander und stellt nicht das Kurvengetriebe dar.

Eine besonders kompakte und stabile Führung des beweglichen Rings ergibt sich dann, wenn er zwischen zwei feststehenden Scheiben laufen kann und in beiden Scheiben zum Beispiel durch die Drehlagerung geführt ist. Das bedeutet für das Beispiel, dass die erste Basis den bewegten Ring bildet, die zweite Basis hat zusätzlich ein zweites Teil, und zwischen diesen beiden Teilen (zum Beispiel Scheiben) der zweiten Basis läuft dann der bewegte Ring. Damit werden die Haltekräfte sehr symmetrisch verteilt, und die Stabilität des erfindungsgemäßen Verschlussmechanismus ist sehr hoch.

Alle ersten Schwenkhebel können an der ersten Basis schwenkbar angebracht sein und/oder alle zweiten Schwenkhebel an der zweiten Basis schwenkbar angebracht sein.

Alle ersten Schwenkhebel sind vorzugsweise baugleich oder zumindest von gleicher Hebellänge und/oder alle zweiten Schwenkhebel sind vorzugsweise baugleich oder zumindest von gleicher Hebellänge. Im optimalen Fall bedeutet dies, dass nur zwei Arten von Schwenkhebeln gebaut werden müssen, nämlich erste Schwenkhebel und zweite Schwenkhebel, aber keine verschiedenen ersten und keine verschiedenen zweiten Schwenkhebel.

Die ersten und die zweiten Anlenkpunkte sind gemäß einer Variante der Erfindung jeweils im Bereich des radial äußeren Umfangsabschnitts des jeweils zugeordneten Segments positioniert, wobei der "äußere Umfangsabschnitt" immer bezogen auf den geschlossenen Zustand des Verschlussmechanismus ist. Es wurde herausgefunden, dass es mit dieser Positionierung der Anlenkpunkte besonders platzsparend möglich ist, die Segmente im geöffneten Zustand nebeneinander zu positionieren. Darüber hinaus sorgt dies für einen kurzen Betätigungsweg zwischen Öffnungs- und Schließvorgang und eine stabile Halterung der Segmente.

Der erste Schwenkhebel kann über ein erstes Schwenklager an der ersten Basis angebracht sein. Der zweite Schwenkhebel kann über ein zweites Schwenklager an der zweiten Basis angebracht sein.

Das erste Schwenklager ist dabei optional radial weiter außen angeordnet als das zweite Schwenklager. Das zweite, weiter radial innen angeordnete Schwenklager ist mit dem zugeordneten Schwenkhebel für die radiale Bewegung nach außen eines Eckbereichs am Umfangsrand des zugehörigen Segments verantwortlich, wogegen das erste Schwenklager mit dem zugehörigen Schwenkhebel hauptsächlich dafür verantwortlich ist, dass der entgegengesetzte Eckbereich des Segments sowohl nach außen fährt als auch um das zweite Schwenklager kippt. Ein Schwenklager sorgt somit für eine Art Orbitalbewegung an einem Punkt des Umfangsrandes des Segments, wogegen das andere Schwenklager, hier das erste Schwenklager für eine überlagerte Schwenk- oder Kippbewegung des gesamten Segments sorgt. Dies bezieht sich auf eine der möglichen Ausführungsformen.

Generell gilt, wenn vom ersten oder zweiten Schwenkhebel im Singular gesprochen wird, dass damit immer alle ersten oder alle zweiten Schwenkhebel gemeint sind.

In einer Variante, die sich durch eine besondere Leichtgängigkeit der Segmente auszeichnet, ist in der Schließstellung der erste oder der zweite Schwenkhebel steiler zu einem unmittelbar angrenzenden Außenrandbereich der Öffnung verlaufend als der zweite Schwenkhebel. Diese Definition der Position der Schwenkhebel ergibt sich durch eine Gerade vom zugeordneten Schwenklager zum entgegengesetzten Ende, an dem der Anlenkpunkt zum Segment vorgesehen ist.

Der flacher stehende (zum Beispiel zweite) Schwenkhebel ist insbesondere derjenige Schwenkhebel, der für die Orbitalbahn eines Bereichs des Segments verantwortlich ist, zum Beispiel ist dieser als Kulissenhebel ausgeführt mit einer Kulissenbahn.

Der erfindungsgemäße Verschlussmechanismus ermöglicht es auch, dass sämtliche Segmente eine plattenförmige, insbesondere im Wesentlichen kreissegmentförmige Gestalt haben und/oder in einer gemeinsamen Ebene liegen, das heißt nicht übereinanderliegen. Die Segmente sind somit sehr einfach ausgeführt, womit Kosten reduziert werden können. Wenn die Segmente in einer Ebene laufen, ist keine Überlagerung der Segmente und kein Übereinanderschieben der Segmente möglich, und die Segmente können auch bei klebrigen Stoffen, die durch die Öffnung hindurchströmen, nicht schnell großflächig miteinander verkleben. Zudem ergibt sich in allen Positionen eine bündige Kontur.

Eine Variante der Erfindung sieht vor, dass keine mit dem bloßen Auge sichtbaren Schlitze zwischen benachbarten Seitenflächen von benachbarten Segmenten beim Öffnen auftreten, sodass nur eine zentrale Öffnung entsteht, die zum Beispiel polygonartig verläuft oder annähernd kreisförmig. Dies verbessert die Strömung und sorgt für eine proportionale Änderung des Strömungsquerschnitts beim Öffnen und Schließen, ohne zusätzliche Verwirbelungen zu erzeugen.

Der erfindungsgemäße Verschlussmechanismus kann beispielsweise auch beim Abfüllen von Flüssigkeiten oder Schüttgut verwendet werden. Hierfür oder auch für andere Varianten sieht die Erfindung in einer Ausgestaltung vor, dass sämtliche Segmente einen in einer gemeinsamen Ebene liegenden Verschlussabschnitt haben sowie einen daran angebrachten, abstehenden Rohrsegmentabschnitt. Diese Rohrsegmentabschnitte können zum Beispiel einstückig in den in der Öffnungsebene liegenden Verschlussabschnitt übergehen. Die Rohrsegmentabschnitte ergänzen sich in sämtlichen Stellungen der Segmente, das heißt in sämtlichen Öffnungspositionen, zu einem Rohr. Durch Bewegung der Segmente zueinander wird der Rohrquerschnitt jedoch verändert, das heißt das entstehende Rohr hat einen variablen Querschnitt. Darüber hinaus können sich die Rohrsegmente aber auch, wenn sie leicht schräg stehen, zu einem Trichter ergänzen, der durch Bewegung der Segmente einen variablen Querschnitt erhält.

Das vorgenannte Kurvengetriebe, mit dem der zweite Schwenkhebel mit der ersten Basis gekoppelt ist, kann beispielsweise durch eine Steuerkurve und ein diese Steuerkurve abtastendes Abtastelement gebildet werden. Es ist dann entweder der zweite Schwenkhebel oder die erste Basis mit der Steuerkurve ausgestattet, wobei dann das jeweils andere Teil mit dem Abtastelement ausgestattet ist. Die Steuerkurve kann im oder am gewählten Bauteil beispielsweise als Nutkurve (auch als Kulissenbahn bezeichnet) und/oder Stegkurve (entsprechend der Steuerkurve verlaufender bahnförmiger Fortsatz) und/oder Kurvenscheibe realisiert werden. Die Nutkurve kann beispielsweise als Einfachnutkurve für ein Abtastelement und/oder Doppel- bzw. Mehrfachnutkurve für zwei oder mehr Abtastelemente ausgeführt sein. Die Stegkurve kann ebenso für das Zusammenspiel mit einem oder mehreren Abtastelementen ausgeführt sein. Gleiches gilt für die Kurvenscheibe. Die Abtastelemente können beispielsweise als Fortsätze oder Stifte oder als Rollen ausgeführt werden, optional auch federbelastet. Alle diese Varianten sind beim erfindungsgemäßen Verschlussmechanismus realisierbar.

Die Segmente können Dichtungen haben, z.B. an ihren den benachbarten Segmenten zugewandten Seitenflächen, und/oder abschnittsweise ineinandergreifen, z.B. über eine Nut-Feder-Verbindung. Die Dichtungen sind beispielsweise Elastomerdichtungen. Diese Optionen sollen zum einen im geschlossenen Zustand für eine fluid- und/oder gasdichte Abdichtung sorgen und zum anderen möglichst auch beim Öffnen dafür sorgen, dass zwischen benachbarten Segmenten kein Spalt entsteht, durch den Fluid durchströmen kann.

Die Dichtigkeit wird natürlich abgestimmt auf das zugeordnete Fluid. Bei Gasen müssen andere Dichtigkeiten erreicht werden als zum Beispiel bei Schüttgütern. Dementsprechend müssen auch andere Toleranzen zwischen den benachbarten Segmenten realisiert werden.

Insbesondere bei besonderen Bewegungsabläufen der Segmente während des Öffnungsvorgangs könnte es vorkommen, dass die linear ausgeführten Seitenflächen nicht mehr an der benachbarten Seitenfläche anliegen. Zu diesem Zweck können die Seitenflächen profiliert sein, sodass sie in diesen kritischen Positionen oder permanent ineinandergreifen. Ein Beispiel hierfür sieht vor, dass eine der Seitenflächen mit einer konvexen Ausbauchung versehen ist. Die gegenüberliegende Seitenfläche des benachbarten Segments hat zwar eine lineare äußere Fläche, jedoch ausgehend von dieser linear äußeren Fläche eine komplementär zur Ausbauchung versehene Einbuchtung. Die Ausbauchung ist vorzugsweise in ihrer Dicke geringer als die Dicke des Segments, dementsprechend ist auch die komplementäre Einbuchtung ein Schlitz innerhalb der Seitenfläche. Durch das Eindringen der Ausbauchung in den Schlitz, das heißt in die Einbuchtung, werden benachbarte Segmente miteinander in Axialrichtung gekoppelt, sodass die plattenartigen Segmente sich gegenseitig stabilisieren.

Eine weitere Verbesserung in diesem Zusammenhang kann dadurch erreicht werden, dass eine Seitenfläche eine lineare äußere Fläche hat, mit axial beabstandeten, vorstehenden Führungsnasen. Diese Führungsnasen stehen sozusagen in der Umfangsrichtung vor. Während eines Teilabschnitts des Bewegungsvorgangs der Segmente zueinander bewegt sich die vorgenannte Ausbauchung zwischen die Führungsnasen im benachbarten Segment und wird dadurch axial geführt, das heißt, die benachbarten Segmente werden auch hier axial miteinander gekoppelt.

Um die Seitenflächen noch vorteilhafter und harmonischer an den gewählten Bewegungsablauf beim Öffnen und Schließen des erfindungsgemäßen Verschlussmechanismus anzupassen, können benachbarte Seitenflächen abschnittsweise so ausgebildet sein, dass sie eine Nut-Feder-Verbindung bilden. Diese Nut-Feder-Verbindung ist vorzugsweise so ausgebildet, dass zwischen benachbarten Segmenten während des gesamten Öffnungs- und Schließvorgangs in axialer Richtung gesehen kein Spalt auftritt, das heißt, dass die Feder eines Segments permanent und längs des gesamten überlappenden Bereichs der benachbarten Segmente in die Nut des benachbarten Segments eingreift.

Eine bevorzugte Ausführungsform sieht hierbei vor, dass die Seitenfläche mit der Nut in Umfangsrichtung konvex ausbaucht und die Seitenfläche mit der Feder komplementär hierzu konkav eingebuchtet ist. Von dieser konkaven Seitenfläche aus steht dann die Feder in Umfangsrichtung vor.

Eine weitere Variante und Verbesserung in diesem Zusammenhang kann dadurch erreicht werden, dass sich von der Ausbauchung in Richtung zum radial äußeren Umfangsrand des Segments ein an die Ausbauchung angeformter Führungssteg erstreckt. Dieser Führungssteg ist Teil des Segments mit der Ausbauchung und vorzugsweise einstückig angeformt. Dieser Führungssteg wandert am Ende des Öffnungsvorgangs, das heißt zumindest im letzten Fünftel der Bewegung des Antriebselements beim Öffnungsvorgang, in eine spitzenseitige Nut im benachbarten Segment. Die spitzenseitige Nut ist, bezogen auf den geschlossenen Zustand, im zentralen Bereich des Segments, wo das Segment eine Spitze hat, ausgebildet. Auch im vollständig geöffneten Zustand des Verschlussmechanismus, alternativ nur im vollständig geöffneten Zustand des Verschlussmechanismus, kann der Führungssteg in die spitzenseitige Nut eindringen. In jedem Fall erfolgt hier auch wieder eine axiale Koppelung benachbarter Segmente.

Für die Verbesserung der Dichtwirkung kann es von Vorteil sein, dass die Segmente seitlich aneinander andrücken. Wie zu Beginn gesagt, ist dieses Andrücken für die Funktion des erfindungsgemäßen Verschlussmechanismus nicht entscheidend, da jedes Segment über das Viergelenk eindeutig in jeder Position definiert ist. Lediglich für die Dichtwirkung kann dieses Andrücken von Vorteil sein. Hierzu ist beispielsweise eine Torsionsfeder für jedes Segment vorhanden, welche um einen der beiden Anlenkpunkte am Segment positioniert ist.

Die Segmente sollten vorzugsweise eine solche Form haben und das Viergelenk sowie das Kurvengetriebe sollten so aufeinander abgestimmt sein, dass zwischen unmittelbar benachbarten Segmenten während des Öffnungsvorgangs kein Spalt entsteht, zumindest kein Spalt, durch den man in axialer Richtung hindurchblicken kann. Dies lässt sich durch die flexible erfindungsgemäße Konstruktion dadurch erreichen, dass das Kurvengetriebe auf die Position und Lage der Segmente zueinander während des gesamten Öffnungsvorgangs abgestimmt werden kann, das heißt das Ergebnis der gewünschten Bewegungen der Segmente zueinander darstellt.

Die Segmente verlaufen, bezogen auf den geschlossenen Zustand, zum Zentrum vorzugsweise spitz zu und/oder haben eine im Wesentlichen dreiecksförmige Gestalt.

Ferner können die Segmente eine im Wesentlichen dreieckige Grundform haben, wobei die zum Zentrum zulaufenden Seiten vorzugsweise eine lineare Grundform haben, mit linearen Seitenflächen, von denen Abschnitte, wie gesagt, auch als Ausbauchung oder als Einschnitt ausgebildet sein können oder mit den vorgenannten Führungsnasen versehen sein können, die jedoch im Betrieb optional nicht sichtbar sind. Die Grundform bleibt dennoch im Wesentlichen dreieckig. Der Außenumfangsrand muss nicht linear verlaufen, er kann beliebige Formen oder angeformte Arme haben, sodass insgesamt nur von dem Prinzip einer dreieckigen Form gesprochen wird.

Wenn die Spitze spitz zuläuft, kann der erfindungsgemäße Verschlussmechanismus ein komplettes Schließen, auch im Zentrum, ermöglichen. Falls hier weniger Fertigungstoleranzen gewünscht sind oder auch bezüglich Abnutzung (zum Beispiel bei harten Schüttgütern) Vorkehrungen getroffen werden sollen, damit dieses komplette Schließen immer realisiert wird, lässt sich an zumindest einem Segment im Bereich der Spitze eine Dichtung anbringen (entweder als separates Teil oder durch Anspritzen). Diese beispielsweise elastomere Dichtung bildet dann das Zentrum des Verschlussmechanismus im geschlossenen Zustand, und die anderen Segmente drücken mit ihrer Spitze gegen die Dichtung. Natürlich können auch mehr als ein Segment eine solche Dichtung im Bereich der Spitze aufweisen.

Beim erfindungsgemäßen Verschlussmechanismus können die Relativbewegungen der Segmente zueinander so festgelegt werden, dass eine nahezu kreisförmige Öffnung (über eine Polygonform realisiert) erreichbar ist, ohne Schlitze zwischen benachbarten Segmenten, wie bei einer nach dem Stand der Technik bekannten Irisblende mit linear geführten Segmenten und mit (in Axialansicht betrachtet) von der jeweiligen Spitze ausgehend linear verlaufenden Seitenflächen. Mit dem erfindungsgemäßen Verschlussmechanismus erfolgt dies jedoch mittels einer Hebelmimik mit Gelenkpunkten statt mit Linearführungen.

Wie sich bei Versuchen herausgestellt hat, ist der Verschlussmechanismus besonders bewegungsoptimiert, wenn die beiden Anlenkpunkte am jeweiligen Segment einen möglichst großen Abstand voneinander haben. Dazu werden die beiden Anlenkpunkte am Segment in verschiedenen Hälften des dreiecksförmigen Segments angebracht. Die Hälften entstehen durch eine Winkelhalbierende durch die Spitze des Segments. Durch die Verortung der Anlenkpunkte in verschiedenen Hälften des Segments ergibt sich für mindestens einen Anlenkpunkt ein Bewegungsablauf mit einer Richtungsumkehr während des Öffnens und Schließens. Für den Fall, dass der zweite Schwenkhebel an dem Anlenkpunkt schwenkbar angebracht ist, der die Richtungsumkehr durchläuft, ist das Kurvengetriebe, d.h. seine eine oder mehrere Steuerkurven, dann entsprechend so ausgebildet, dass der zweite Schwenkhebel beim Öffnungsvorgang zuerst in Richtung Zentrum schwenkt und anschließend nach außen schwenkt, also die genau dazu passende Drehrichtungsumkehr durchläuft.

Eine andere Variante der Erfindung sieht vor, dass das Kurvengetriebe so ausgebildet ist, dass zu Beginn des Öffnungsvorgangs die Segmente zuerst eine rein radiale Bewegung nach außen und anschließend eine Schwenkbewegung, genauer gesagt eine Kurvenbewegung, nach außen ausführen. Durch die rein radiale Bewegung gibt es keine Querbewegung der Segmente zueinander, vielmehr wird zwischen den Segmenten ein Abstand gebildet, der allenfalls durch die Dichtung überbrückt wird. Diese Variante ist besonders dann geeignet, wenn an den Seitenflächen Dichtungen angebracht sind. Dichtungen werden nämlich dann besonders schnell funktionsuntüchtig, wenn sie seitlich aufeinander scheuern oder seitlich durch ein angrenzendes Teil eine Scheuerbewegung auf die Dichtung ausgeübt wird. Wird die elastische Dichtung jedoch nur senkrecht gedrückt und wird dieser Druck durch eine senkrechte Bewegung wieder aufgehoben, erfolgt nur ein Zusammendrücken und ein Lösen, ohne eine Querbewegung hierzu. Gerade dies wird durch die Variante realisiert, so dass eine reine radiale Bewegung zwischen den Segmenten zu Beginn des Öffnungsvorgangs erfolgt. Die entsprechenden Dichtungen werden folglich im letzten Moment der Schließbewegung nur zusammengepresst, ohne zugleich in Längsrichtung belastet zu werden.

Das Kurvengetriebe kann auch so ausgebildet sein, dass gleich zu Beginn des Öffnungsvorgangs eine Schwenkbewegung der Segmente mit einem überlagerten radialen Bewegungsanteil stattfindet, so dass gleichzeitig zur Schwenkbewegung von Beginn an ein Abstand zwischen den Segmenten gebildet wird, um, wie bereits erwähnt, ein Scheuern und somit Abnutzen der Dichtungen zu vermeiden. Die exakte Bewegungsbahn der Segmente kann so ausgeführt sein, dass immer der für die jeweilige Anwendung optimale Abstand der Segmente zueinander eingehalten wird, beispielsweise in Abhängigkeit des gewählten Materials für die Segmente und der Geometrie des Dichtsystems.

Eine weitere Möglichkeit, die Segmente im geschlossenen Zustand miteinander zu verriegeln, um eine feste, geschlossene Platte aus den Segmenten zu erzeugen, besteht darin, dass die Segmente eine zulaufende Spitze haben und die Spitzen im geschlossenen Zustand im Zentrum zusammentreffen, wobei die Segmente an einer Seitenfläche einen Zentrierfortsatz haben. Dieser Zentrierfortsatz steht seitlich vor und dringt im geschlossenen Zustand in eine insbesondere komplementäre Ausnehmung in einer unmittelbar gegenüberliegenden Seitenfläche des benachbarten Segments ein. Damit werden die Segmente mechanisch aneinander arretiert. Diese Art der Verriegelung der Segmente zueinander kann zusätzlich oder alternativ zu den vorgenannten Ausbauchungen oder Führungsnasen vorgesehen sein.

Um die Bewegung der ersten Schwenkhebel zueinander oder der zweiten Schwenkhebel zueinander optimal zu synchronisieren und ihre Winkellage immer zueinander konstant zu halten, kann eine von der ersten und der zweiten Basis separate, mechanische Koppelungsvorrichtung vorgesehen sein. Diese Koppelungsvorrichtung verbindet die Schwenkhebel, das heißt entweder die ersten Schwenkhebel oder die zweiten Schwenkhebel, miteinander. Beispiele für eine solche Koppelungsvorrichtung sind Koppelstangen, die benachbarte Schwenkhebel miteinander verbinden, Zahnräder oder dergleichen.

Um die Stabilität der Konstruktion zu erhöhen und eine integrale Anordnung der Bauteile zu erreichen, kann die axiale Anordnung der Komponenten zueinander und/oder die Anordnung der Drehlagerungen variiert werden. Dabei können sich beispielsweise Schwenkhebel oder Basen axial beidseitig von den Segmenten befinden und/oder Schwenkhebel die Segmente außenrandseitig umgreifen und somit auf den axial entgegengesetzten Seiten des Segments liegen. Diese geschachtelte Anordnung kann so gestaltet sein, dass Bauteile, beispielsweise eine Basis, zwischen anderen Bauteilen, beispielsweise Schwenkhebeln und der jeweils anderen Basis, axial fixiert werden. Dadurch wird bei geschickter Anordnung das Einsparen von Befestigungselementen möglich. Der konstruktive Aufbau kann vereinfacht, Gewicht reduziert und der vorhandene Bauraum optimal genutzt werden. Natürlich muss bei einem, ein Segment umgreifenden Schwenkhebel nicht nur auf einer Seite eine Kulissenbahn vorhanden sein, sondern es können an beiden Schenkeln (der Schwenkhebel hat in diesem Fall auf jeder Seite des Segments einen Schenkel) des Schwenkhebels eine Kulissenbahn vorhanden sein.

Um bei der Gestaltung des genauen Bewegungsablaufs beim Öffnen und Schließen des Verschlussmechanismus noch individuellere Möglichkeiten zur Optimierung zu haben, können die Schwenklager der ersten Schwenkhebel bei einer Variante statt auf einer Kreisbahn auf einer frei zu definierenden Bahn bewegt werden. Dafür ist in oder an der ersten sowie in oder an der zweiten Basis je eine Kurvenbahn, z.B. je eine Kulissenbahn, vorgesehen, die sich aufgrund der Relativbewegung der beiden Basen zueinander auch relativ zueinander bewegen. In axialer Blickrichtung betrachtet überschneiden sich diese beiden Kurvenbahnen. Der Schnittpunkt definiert die Position des Schwenklagers der ersten Schwenkhebel und wandert während des Öffnens und Schließens durch die vorgenannte Relativbewegung. Die Schwenklager der ersten Schwenkhebel können beispielsweise axial hervorstehende Vorsprünge oder Fortsätze an den ersten Schwenkhebeln aufweisen, die sowohl an einer Kurvenbahn, z.B. einer Kulissenbahn, der ersten Basis als auch an einer Kurvenbahn, z.B. Kulissenbahn, der zweiten Basis geführt sind.

Eine Erweiterung dieser Variante kann so gestaltet sein, dass die ersten Schwenkhebel nicht an einem wandernden Schnittpunkt der beiden Kurvenbahnen der ersten und zweiten Basis geführt werden, sondern dass die ersten Schwenkhebel zur Koppelung mit den beiden Basen statt einem gemeinsamen Koppelelement zwei Koppelelemente (zum Beispiel axial hervorstehende Vorsprünge oder Fortsätze) haben, von denen eines an einer Kurvenbahn, z.B. Kulissenbahn, der ersten Basis und das zweite an einer Kurvenbahn, z.B. Kulissenbahn, der zweiten Basis geführt ist.

Nachdem der erfindungsgemäße Verschlussmechanismus auch zum Abdichten einer Öffnung vorgesehen sein kann, bei der die Öffnung sehr dicht verschlossen wird, sieht eine Variante der Erfindung vor, dass die Segmente an ihrem äußeren Umfangsrand zumindest an einer axialen Stirnfläche, bevorzugt an beiden axialen Stirnflächen, einen vorstehenden Rand haben. Dieser Rand steht axial vor und hat die Form eines Kreissegments. Im geschlossenen Zustand des Verschlussmechanismus ergänzen sich diese vorstehenden Ränder zu einem geschlossenen, umlaufenden Ringfortsatz, insbesondere Kreisringfortsatz. Der Verschlussmechanismus ist an oder in einem Gehäuse eingebaut, und zwar im Bereich eines Lochs, welches er verschließen oder freigeben kann. Zwischen Gehäuse und Ringfortsatz kann eine Dichtung vorgesehen sein, die die Segmente zum Gehäuse abdichtet.

Das Abdichten kann auf unterschiedliche Arten erfolgen. Zum Beispiel ist am Gehäuse eine Ringdichtung vorgesehen oder es sind zwei Ringdichtungen vorgesehen, falls an beiden axialen Stirnflächen vorstehende Ränder vorhanden sind, gegen das der zugeordnete Ringfortsatz im geschlossenen Zustand drückt. Damit wird eine Seite des Verschlussmechanismus pro Ringfortsatz gegenüber dem Gehäuse abgedichtet.

Das Dichtkonzept kann alternativ hierzu auch so gewählt werden, dass der vorstehende Rand an den Segmenten mit einer Dichtung ausgestattet wird und gegen das Gehäuse mit oder ohne gehäuseseitige Dichtung drückt. Außerdem kann abweichend von einer Ringdichtung auch eine freigeformte Dichtung realisiert werden, die auf die Form der vorstehenden Ränder an den Segmenten abgestimmt ist.

Die erste oder zweite Basis kann Teil des Gehäuses sein oder fest am Gehäuse angebracht sein, wogegen die jeweils andere Basis dann bewegt wird, das heißt relativ zum Gehäuse bewegt wird, um den Verschlussmechanismus zu betätigen.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Explosionsansicht einer ersten, beispielhaften Ausführungsform des erfindungsgemäßen Verschlussmechanismus im geschlossenen Zustand,
- Figur 2 eine Perspektivansicht des Verschlussmechanismus nach Figur 1 in geschlossenem Zustand, wobei zur besseren Ansicht der Mechanik eine Basis entfernt ist,
- Figur 3 eine Perspektivansicht des Verschlussmechanismus gemäß Figur 2 in teilweise geöffnetem Zustand,
- Figur 4 eine Perspektivansicht des Verschlussmechanismus gemäß Figur 2 in weiter geöffnetem Zustand,
- Figur 5 eine Perspektivansicht des Verschlussmechanismus gemäß Figur 2 in vollständig geöffnetem Zustand,
- Figur 6 eine vergrößerte Teilansicht des Verschlussmechanismus gemäß Figur 2, mit entfernter Basis, bei der zur Verdeutlichung nur zwei Segmente dargestellt sind, in geschlossenem Zustand,
- Figur 7 eine entsprechende Ansicht gemäß Figur 6, nur in weiter geöffnetem Zustand,
- Figur 8 eine entsprechende Ansicht gemäß Figur 6 des Verschlussmechanismus, nur in vollständig geöffnetem Zustand,
- Figur 9 eine zweite Ausführungsform des Verschlussmechanismus, die ähnlich zu Figur 1 ausgeführt ist, mit einer Koppelungsvorrichtung zur Verbindung von Schwenkhebeln,
- Figur 10 einen gegenüber der ersten Ausführungsform etwas abgewandelten Verschlussmechanismus in teilweise geöffnetem Zustand mit trichterförmigem Einlass,
- Figur 11 den Verschlussmechanismus nach Figur 10 in weiter geöffnetem Zustand,
- Figur 12 eine Explosionsansicht einer dritten Ausführungsform des erfindungsgemäßen Verschlussmechanismus in teilweise geöffnetem Zustand,
- Figur 13 den Verschlussmechanismus nach Figur 12 in Detailansicht mit nur zwei Segmenten und einer weggelassenen Basis in geschlossenem Zustand,
- Figur 14 eine entsprechende Ansicht des Verschlussmechanismus gemäß Figur 13 in teilweise geöffnetem Zustand,
- Figur 15 eine entsprechende Ansicht des Verschlussmechanismus gemäß Figur 13 in vollständig geöffnetem Zustand,
- Figur 16 eine vergrößerte Ansicht eines Verschlussmechanismus gemäß einer vierten Ausführungsform mit zwei Segmenten und einer weggelassenen Basis in geschlossenem Zustand,
- Figur 17 den Verschlussmechanismus nach Figur 16 in einer teilweise geöffneten Stellung,
- Figur 18 den Verschlussmechanismus nach Figur 16 in einem vollständig geöffneten Zustand,
- Figur 19 eine fünfte Ausführungsform des erfindungsgemäßen Verschlussmechanismus mit zwei Segmenten und einer weggelassenen Basis in vollständig geschlossenem Zustand,
- Figur 20 den Verschlussmechanismus nach Figur 19 in einem teilweise geöffneten Zustand,
- Figur 21 den Verschlussmechanismus nach Figur 19 in einem vollständig geöffneten Zustand,
- Figur 22 eine Perspektivansicht zweier benachbarter Segmente des erfindungsgemäßen Verschlussmechanismus, zur Darstellung eines Dichtsystems, im geschlossenen Zustand,
- Figur 23 eine entsprechende Ansicht der Segmente gemäß Figur 22, in teilweise geöffnetem Zustand des Verschlussmechanismus,
- Figur 24 die Segmente gemäß Figur 22 in noch weiter geöffnetem Zustand des Verschlussmechanismus,
- Figur 25 die Segmente gemäß Figur 22 in vollständig geöffnetem Zustand des Verschlussmechanismus,
- Figur 26 eine perspektivische Ansicht eines Segments, das über eine Torsionsfeder kraftbeaufschlagt ist,
- Figur 27 eine Schnittansicht in einer die Mittelachse aufweisenden Ebene, wenn der Verschlussmechanismus in einem Gehäuse eingebaut ist und in geschlossenem Zustand ist,
- Figur 28 eine vergrößerte Ansicht des erfindungsgemäßen Verschlussmechanismus gemäß einer sechsten Ausführungsform mit zwei Segmenten und einer weggelassenen Basis in geschlossenem Zustand,
- Figur 29 den Verschlussmechanismus nach Figur 28 in etwas geöffnetem Zustand,
- Figur 30 den Verschlussmechanismus nach Figur 28 in weiter geöffnetem Zustand,
- Figur 31 eine perspektivische Oberansicht einer siebten Ausführungsform des erfindungsgemäßen Verschlussmechanismus, die ähnlich zur ersten Ausführungsform ausgebildet ist, jedoch mit weiter innen angeordneter Drehlagerung und mit zweiten Schwenkhebeln, die die Segmente am äußeren Rand umgreifen und axial beidseitig der Segmente liegen, in teilweise geöffnetem Zustand,
- Figur 32 eine perspektivische Unteransicht des Verschlussmechanismus gemäß Figur 31 im geschlossenen Zustand,

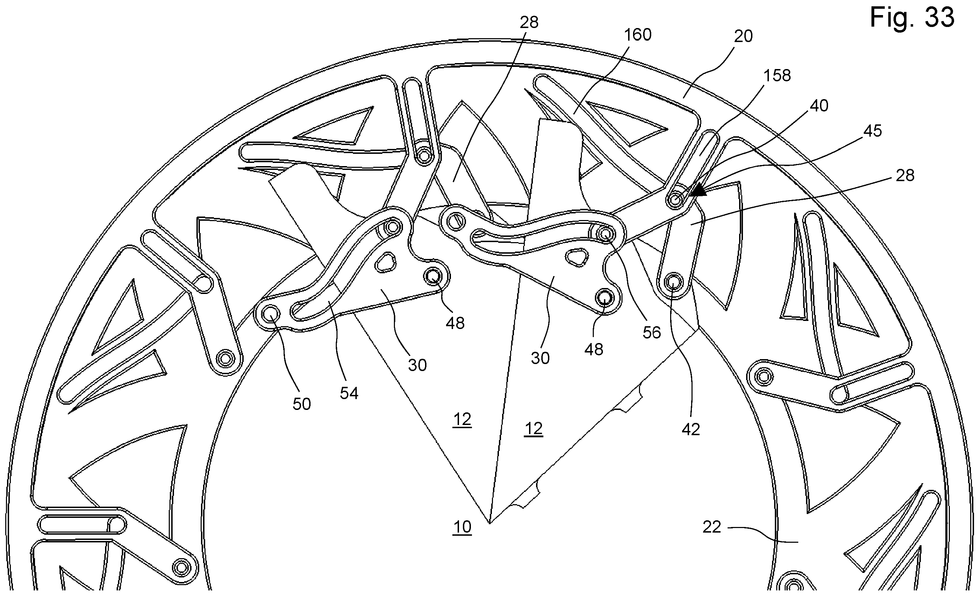

- Figur 33 eine vergrößerte Teilansicht des erfindungsgemäßen Verschlussmechanismus gemäß einer achten Ausführungsform, die ähnlich zur ersten Ausführungsform ausgebildet ist, bei der jedoch die Vorsprünge der Schwenklager der ersten Schwenkhebel nicht auf einer Kreisbahn bewegt werden, sondern deren Position durch zwei sich überschneidende und sich relativ zueinander bewegende Kurvenbahnen definiert wird, von denen sich eine auf der ersten Basis und eine auf der zweiten Basis befindet, zur besseren Übersichtlichkeit mit nur zwei Segmenten und einer weggelassenen Basis dargestellt, in geschlossenem Zustand,
- Figur 34 eine entsprechende Ansicht gemäß Figur 33 in teilweise geöffnetem Zustand,
- Figur 35 eine entsprechende Ansicht gemäß Figur 33 des Verschlussmechanismus in vollständig geöffnetem Zustand,
- Figur 36 eine vergrößerte Teilansicht des erfindungsgemäßen Verschlussmechanismus gemäß einer neunten Ausführungsform, die ähnlich zur achten Ausführungsform ausgeführt ist, bei der jedoch die ersten Schwenkhebel nicht durch einen Vorsprung eines Schwenklagers gleichzeitig mit beiden Basen gekoppelt sind, sondern über einen Vorsprung mit der ersten Basis und ein eigenes Koppelelement mit der zweiten Basis gekoppelt sind, zur besseren Übersicht mit nur zwei Segmenten und einer weggelassenen ersten Basis dargestellt, in geschlossenem Zustand,
- Figur 37 eine entsprechende Ansicht gemäß Figur 36 in teilweise geöffnetem Zustand,
- Figur 38 eine entsprechende Ansicht gemäß Figur 36 des Verschlussmechanismus in vollständig geöffnetem Zustand,
- Figur 39 eine Perspektivansicht zweier benachbarter Segmente des erfindungsgemäßen Verschlussmechanismus, die ähnlich zu Figur 22 ausgeführt sind, bei denen jedoch die Seitenflächen nicht linear bzw. planar sind, sondern eine gekrümmte Form haben und bei denen die in Umfangsrichtung vorstehenden Führungsnasen vergrößert ausgeführt und harmonisch in die Seitenflächen integriert sind, im geschlossenen Zustand des Verschlussmechanismus,
- Figur 40 eine entsprechende Ansicht der Segmente gemäß Figur 39, in teilweise geöffnetem Zustand des Verschlussmechanismus,
- Figur 41 die Segmente gemäß Figur 39 in noch weiter geöffnetem Zustand des Verschlussmechanismus,
- Figur 42 die Segmente gemäß Figur 39 in vollständig geöffnetem Zustand des Verschlussmechanismus,
- Figur 43 eine Perspektivansicht des erfindungsgemäßen Verschlussmechanismus gemäß einer zehnten Ausführungsform, die ähnlich zu Figur 9 ausgeführt ist, bei der jedoch nur ein zweiter Schwenkhebel die Steuerkurve des Kurvengetriebes trägt und alle anderen zweiten Schwenkhebel über einen verzahnten Ring als Koppelungsvorrichtung mit dem die Steuerkurve tragenden zweiten Schwenkhebel mechanisch synchron geschaltet und somit auch über das Kurvengetriebe mit der ersten Basis gekoppelt sind,
- Figur 44 eine Explosionsansicht einer elften Ausführungsform des erfindungsgemäßen Verschlussmechanismus in teilweise geöffnetem Zustand,
- Figur 45 den Verschlussmechanismus nach Figur 44 in Detailansicht mit nur zwei Segmenten und einer weggelassenen Basis in geschlossenem Zustand,
- Figur 46 eine entsprechende Ansicht des Verschlussmechanismus gemäß Figur 45 in teilweise geöffnetem Zustand, und
- Figur 47 eine entsprechende Ansicht des Verschlussmechanismus gemäß Figur 45 in vollständig geöffnetem Zustand.

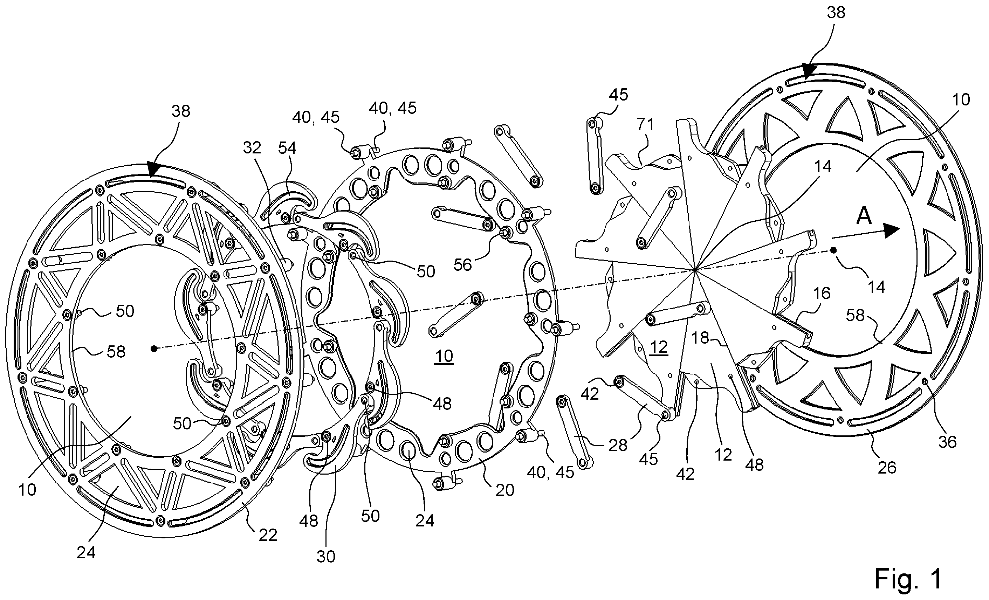

In Figur 1 ist ein Verschlussmechanismus dargestellt, der, wie eingangs erwähnt, für verschiedenste Einsatzzwecke geeignet und irisblendenartig ausgeführt ist.

Der Verschlussmechanismus wird beispielsweise in ein später dargestelltes Gehäuse mit einem Loch eingesetzt und ist dafür geeignet, dieses Loch zu öffnen und wahlweise auch zu schließen. Der Verschlussmechanismus selbst hat eine Öffnung 10, die mit dem Loch im Gehäuse fluchtet. Diese Öffnung 10 kann durch zueinander bewegliche Segmente 12 verschlossen werden.

Die Segmente 12 sind insbesondere im Wesentlichen dreiecksförmig ausgeführt und laufen zu einem Zentrum 14, welches auch das Zentrum 14 der Öffnung 10 ist, spitz zu.

Vorzugsweise haben die Segmente eine plattenförmige Gestalt, das heißt sie sind relativ dünn und besitzen zum Zentrum 14 aufeinander zulaufende, in Draufsicht lineare Seitenflächen 16, 18, welche entgegengesetzt gerichtet sind. Jedes Segment hat also eine Seitenfläche 16, die der Seitenfläche 18 des benachbarten Segments 12 unmittelbar gegenüberliegt.

Darüber hinaus umfasst der Verschlussmechanismus eine erste Basis 20, hier in Form eines Ringes, der die Öffnung 10 ebenfalls aufweist, und eine daran angrenzende zweite Basis 22, ebenfalls in Form eines Ringes, der die Öffnung 10 aufweist. Die beiden die Basis 20, 22 bildenden Ringe sind vorzugsweise scheibenförmig ausgebildet und können zur Reduzierung des Gewichts Ausnehmungen 24 haben, wobei dies nur optional der Fall ist. Die zweite Basis 22 liegt an einer Stirnseite der ersten Basis 20, auf der entgegengesetzten Stirnseite liegt eine dritte Basis 26, hier ebenfalls in Form eines scheibenförmigen Ringes.

In der gezeigten Ausführungsform, dies ist nicht einschränkend zu verstehen, liegen die Segmente 12 in Axialrichtung A (senkrecht zur Ebene der Öffnung 10) zwischen der ersten Basis 20 und der dritten Basis 26.

Der Begriff "Basis" ist nicht auf eine flache Kreisscheibe limitiert, sondern bezeichnet eine Haltestruktur mit einer Öffnung, die vorzugsweise einstückig ist, aber auch mehrteilig ausgeführt sein kann. Die Scheibenform zeichnet sich durch minimalen axialen Bauraum aus.

Jedes Segment 12 ist Teil eines eigenen Viergelenks. Das Viergelenk wird durch einen eigenen, ersten Schwenkhebel 28 und einen eigenen, zweiten Schwenkhebel 30 und das Segment 12 als mittleres Glied des Viergelenks definiert.

Sämtliche ersten Schwenkhebel 28 sind gleich ausgebildet, das heißt gleichteilig, ebenso wie die zweiten Schwenkhebel 30 zwar unterschiedlich zu den ersten Schwenkhebeln 28 sind, jedoch für sich gleiche Teile darstellen.

Die erste Basis 20 ist zur zweiten Basis 22 und zur dritten Basis 26 relativ beweglich, das heißt umgekehrt können auch die zweite und die dritte Basis 22 bzw. 26 relativ zur ersten Basis 20 gemeinsam bewegt werden.

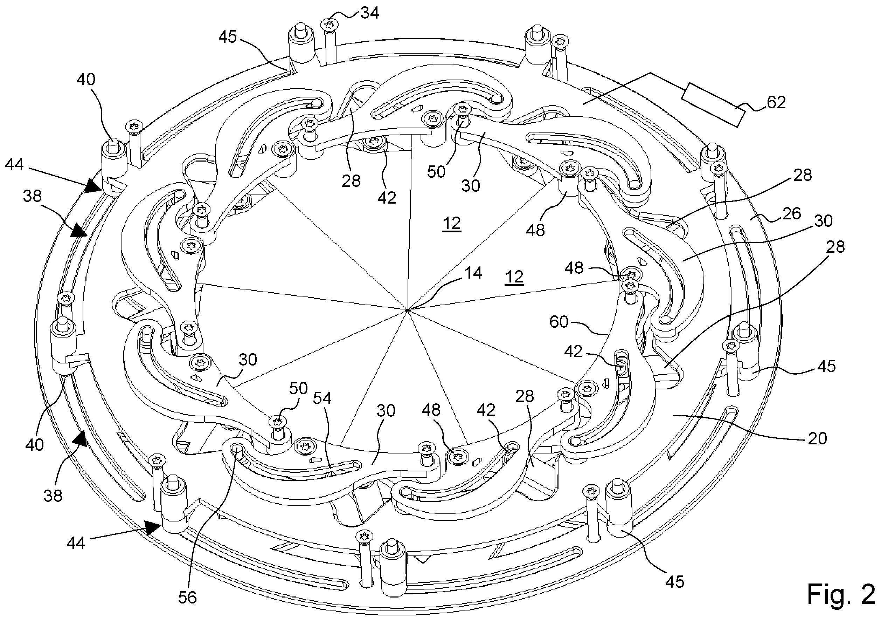

Obwohl die zweite Basis 22 und die dritte Basis 26 axial voneinander beabstandet sind, sind sie miteinander verbunden, nämlich über in Figur 1 zu sehende Abstandshalter 32 in Verbindung mit hier durch die Abstandshalter laufenden Befestigungselementen 34 (siehe Figur 2), zum Beispiel Schrauben. Entsprechende Befestigungslöcher 36 sind in der dritten Basis 26 in Figur 1 zu sehen. Die Art der Befestigung ist jedoch nicht auf diese Befestigungsmethode eingeschränkt.

Die erste Basis 20 ist bei der dargestellten Ausführungsform über eine Drehlagerung 44 (siehe Figur 2) mit der zweiten Basis 22 und auch mit der dritten Basis 26 drehbar gekoppelt. Hierzu haben die zweite und die dritte Basis 22, 26 kreissegmentförmige Kulissenführungen 38, in die Vorsprünge 40 an der ersten Basis 20 hineinragen. Durch die am Umfang verteilten Kulissenführungen 38 und die zahlreichenden Vorsprünge 40 ergibt sich eine hervorragende, spielarme Drehlagerung zwischen der ersten Basis 20 und der zweiten Basis 22.

Im Folgenden wird auf die Lagerung der Segmente 12 eingegangen.

Jedes Segment 12 ist, wie gesagt, ein Mittelteil eines eigenen Viergelenks, welches neben dem zugeordneten Segment 12 einen ersten Schwenkhebel 28 aufweist, der an einem ersten Anlenkpunkt 42 am zugeordneten Segment schwenkbar angebracht ist. Am vorzugsweise entgegengesetzten Ende des jeweils ersten Schwenkhebels 28 ist jeder Schwenkhebel 28 über ein erstes Schwenklager 45 an der ersten Basis 20 angebracht.

Das Schwenklager 45 hat in der dargestellten Ausführungsform, ohne dass dies einschränkend zu verstehen ist, im ersten Schwenkhebel 28 eine Öffnung, in die der stiftartige Vorsprung 40 an der ersten Basis 20 eingreift, der auch in die Kulissenführung 38 eindringt, sodass mit einem Vorsprung 40 zwei Lagerungen erreicht werden. Das Schwenklager 45 wird folglich durch den Vorsprung 40 und die Öffnung, in die der Vorsprung 40 hineinragt, gebildet.

Vorzugsweise, auch dies ist nicht einschränkend zu verstehen, ist der erste Anlenkpunkt 42 an einem in Umfangsrichtung äußeren Eckbereich des entsprechenden Segments 12 angeordnet.

Seitlich beabstandet, das heißt in Umfangsrichtung bezogen auf das Zentrum 14, ist der zweite Schwenkhebel 30 über einen zweiten Anlenkpunkt 48 schwenkbar am zugeordneten Segment 12 befestigt.

Am entfernten Ende des zweiten Schwenkhebels 30 ist dieser über ein zweites Schwenklager 50 mit der zweiten Basis 22 gekoppelt. Als Schwenklager können beispielsweise ein Stift oder eine Schraube und eine entsprechende Öffnung, in die der Stift oder die Schraube eingreift, ausgebildet sein.

Nur als Beispiel hierfür ist in Figur 1 am Schwenkhebel 30 eine Öffnung im Bereich des zweiten Schwenklagers 50 dargestellt und im Bereich der zweiten Basis 22 eine Schraube im Bereich des zweiten Schwenklagers 50.

In Figur 2 ist die zweite Basis 22 weggelassen, um die Übersichtlichkeit zu erhöhen. Die zweiten Schwenklager 50 sind jedoch dadurch zu erkennen, dass die entsprechenden Schraubbolzen mit ihren Köpfen nach oben, aus der Zeichenebene heraus, von ihren zugeordneten zweiten Schwenkhebeln 30 beabstandet sind. Dieser Abstand entspricht der Dicke der zweiten Basis 22.

In Figur 2 ist gut zu erkennen, dass jeder zweite Schwenkhebel 30 über ein Kurvengetriebe mit der ersten Basis 20 mechanisch so gekoppelt ist, dass die zweiten Schwenkhebel 30 und die erste Basis 20 in ihren Positionen eindeutig zueinander festgelegt sind. Das Kurvengetriebe umfasst im vorliegenden Fall eine Kulissenbahn 54 als Steuerkurve und einen darin eindringenden stiftartigen Fortsatz 56 als Abtastelement, wobei beispielhaft in der dargestellten Ausführungsform die Kulissenbahn 54 im zweiten Schwenkhebel 30 und der Fortsatz 56 an der ersten Basis 20 vorhanden sind.

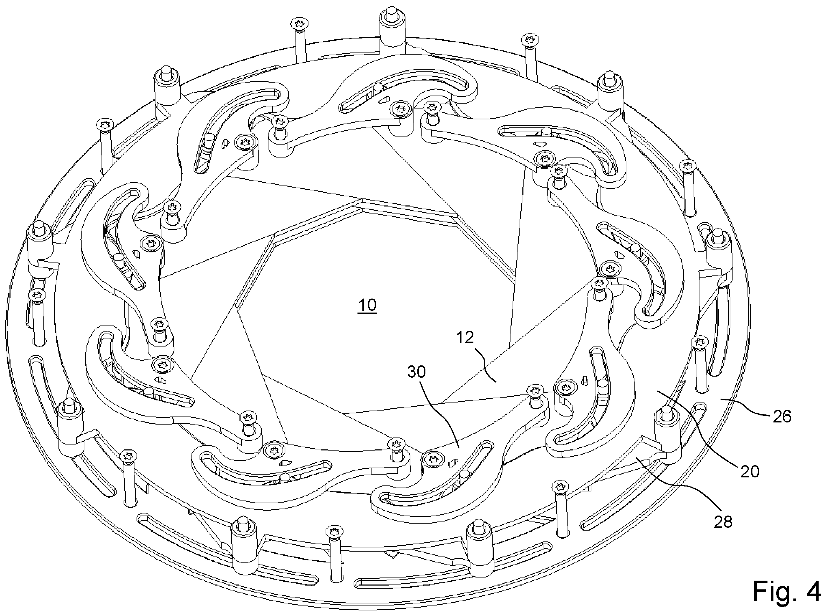

Wie in den Figuren 1 bis 5 zu erkennen, sind alle ersten Schwenkhebel 28 an der ersten Basis 20 schwenkbar angebracht und alle zweiten Schwenkhebel 30 an der zweiten Basis 22. Die Schwenkhebel 28, 30 sind jeweils für sich gleich ausgerichtet und am Umfang gleichmäßig verteilt.

Die Öffnung 10 wird im vorliegenden Fall durch einen Außenrand 58 der zweiten Basis 22 und der dritten Basis 26 definiert, die den gleichen Innenquerschnitt haben, welcher kleiner ist als der Innenquerschnitt der ringartigen ersten Basis 20. Natürlich könnte auch die erste Basis 20 die Öffnung 10 definieren.

Sämtliche Schwenklager 45, 50 liegen radial außerhalb des Außenrandes 58 und somit außerhalb der Öffnung 10 in Axialansicht, das heißt mit Blick in die Axialrichtung A.

Bei der dargestellten Ausführungsform ist das erste Schwenklager 45 jeweils radial weiter außen angebracht als das zugeordnete zweite Schwenklager 50, wobei auch dies nur optional der Fall ist.

Im geschlossenen Zustand des Verschlussmechanismus, der in Figur 2 zu sehen ist, verläuft der erste Schwenkhebel 28 steiler zu einem unmittelbar angrenzenden Außenrandbereich 60 (vgl. den etwa bei 3 Uhr liegenden ersten Schwenkhebel 28 in Figur 2) als der zugeordnete zweite Schwenkhebel 30, welcher in Figur 2 entgegen dem Uhrzeigersinn vor dem Schwenkhebel 28 bei etwa 2 Uhr liegt.

In Figur 2 ist ferner gut zu erkennen, dass sämtliche Segmente 12, die eine kreissegmentförmige Gestalt haben, in einer gemeinsamen Ebene liegen und sich zu einem plattenartigen Verschluss ergänzen.

Die Bewegung des Verschlussmechanismus erfolgt im vorliegenden Fall über eine Drehbewegung der ersten Basis 20, beispielsweise über einen in Figur 2 symbolisch dargestellten Antrieb 62, der beweglich ausgebildet sein kann. Natürlich kann auch umgekehrt die dritte Basis 26 und damit die zweite Basis 22 relativ zur dann stationären ersten Basis 20 bewegt werden.

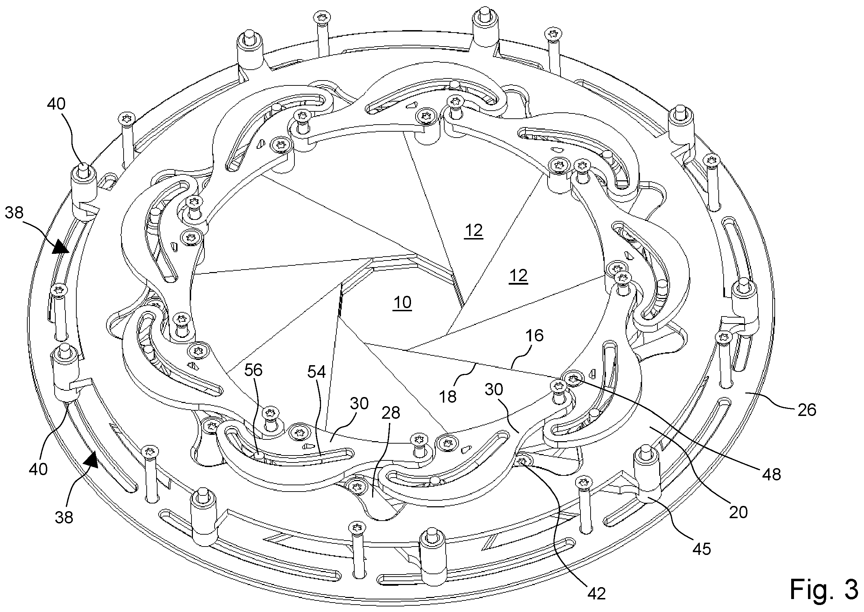

Wird die erste Basis 20 entgegen dem Uhrzeigersinn bewegt, wandern die Vorsprünge 40 in der zugeordneten Kulissenführung 38 der zweiten Basis 22 und der dritten Basis 26, wie in Figur 3 zu sehen ist. Die ersten Schwenklager 45, die in der dargestellten Ausführungsform auch durch die stiftartigen Vorsprünge 40 gebildet werden, wandern damit auch längs eines Kreissegments und ziehen somit die ersten Anlenkpunkte 42 und damit das entsprechende Segment 12 nach außen. Gleichzeitig wandert mit der Basis 20 auch der zugeordnete Fortsatz 56 entgegen dem Uhrzeigersinn und schwenkt den zweiten Schwenkhebel 30 um das im Raum feststehende Schwenklager 50. Die Bewegungsübertragung auf das Segment 12 erfolgt über den zweiten Anlenkpunkt 48. Im dargestellten Ausführungsbeispiel liegen die Anlenkpunkte 42, 48 in entgegengesetzten Eckbereichen am radial äußeren Umfangsrandbereich, das heißt nahe des Umfangsrands 71 (siehe Figur 1) des zugeordneten Segments, was aber nicht einschränkend zu verstehen ist.

In der dargestellten Variante ist die Kulissenbahn 54 so ausgebildet, dass beim Öffnungsvorgang der zweite Schwenkhebel 30 zuerst in Richtung Zentrum schwenkt und anschließend nach außen schwenkt. Dadurch ergibt sich eine optimale Bewegung der Segmente 12 zueinander, denn die Segmente 12 liegen seitlich ohne sichtbaren Spalt beim Öffnen des Verschlussmechanismus aneinander an oder grenzen ohne sichtbaren Spalt unmittelbar aneinander. Diese Bewegung ist dann im Hinblick auf Dichtigkeit optimal, wenn in Axialansicht die Segmente 12 von der jeweiligen Spitze 70 ausgehend an beiden Seitenflächen 16, 18 linear verlaufen.

Die Figuren 3 bis 5, die nacheinander abfolgende Situationen während des Öffnens zeigen, verdeutlichen, dass die Segmente 12 in jeder Öffnungsstellung mit ihren Seitenflächen 16, 18 an den angrenzenden Segmenten 12 anliegen und kein seitlicher Spalt zwischen benachbarten Segmenten 12 erzeugt wird. Die entstehende, immer größer werdende Öffnung 10 hat die Umrisse eines Polygons, wie bei Irisblenden üblich.

Dadurch, dass jedes Segment 12 Teil eines Viergelenks ist, besitzt es eine eigene, festgelegte mechanische Steuerung und einen eigenen, von der ersten Basis 20 ausgehenden Antriebsimpuls. Ein Klemmen der Segmente 12 wird verhindert.

Zu erkennen ist auch, dass die Kulissenbahn 54 flach und ohne erkennbare Abknickungen verläuft, sondern nur als leichter Bogen. Dies sorgt für optimale Kräfteverhältnisse und Hebelverhältnisse, die ein Klemmen zudem vermeiden.

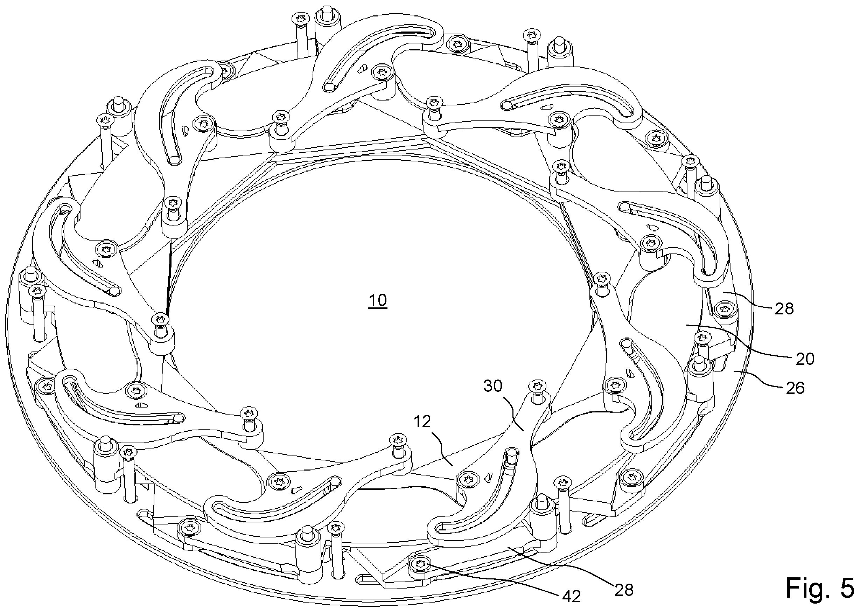

Vergleicht man die Figuren 2 und 5, so erkennt man auch, dass der Drehwinkel zum kompletten Öffnen und Schließen des Verschlussmechanismus extrem klein ist, sodass der Stellhub des Antriebs 62 minimal sein kann. Dies ermöglicht ein sehr schnelles Öffnen und Schließen.

Im vollständig geöffneten Zustand erstrecken sich die ersten Schwenkhebel 28 annähernd längs einer Tangente um das Zentrum 14 zu einem Kreis durch die ersten Schwenklager 45, wogegen die zweiten Schwenkhebel 30 nun steiler und einer radialen Linie angenäherter verlaufen, wobei die Lage und Ausrichtung der Schwenkhebel 28, 30 immer bezogen auf eine Verbindungslinie zwischen zugeordnetem Anlenkpunkt 42, 48 und jeweiligem Schwenklager 45, 50 bestimmt wird.

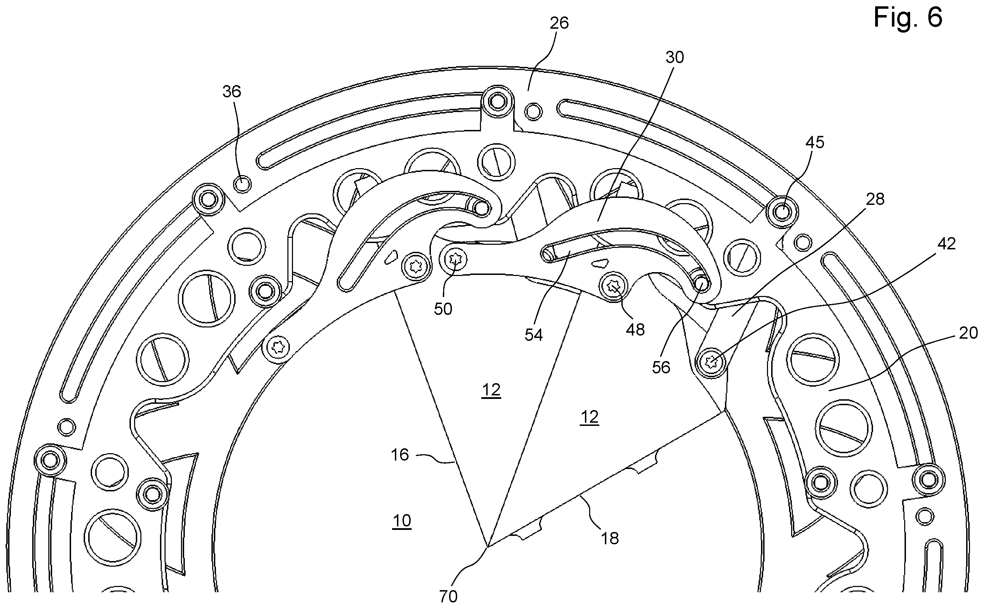

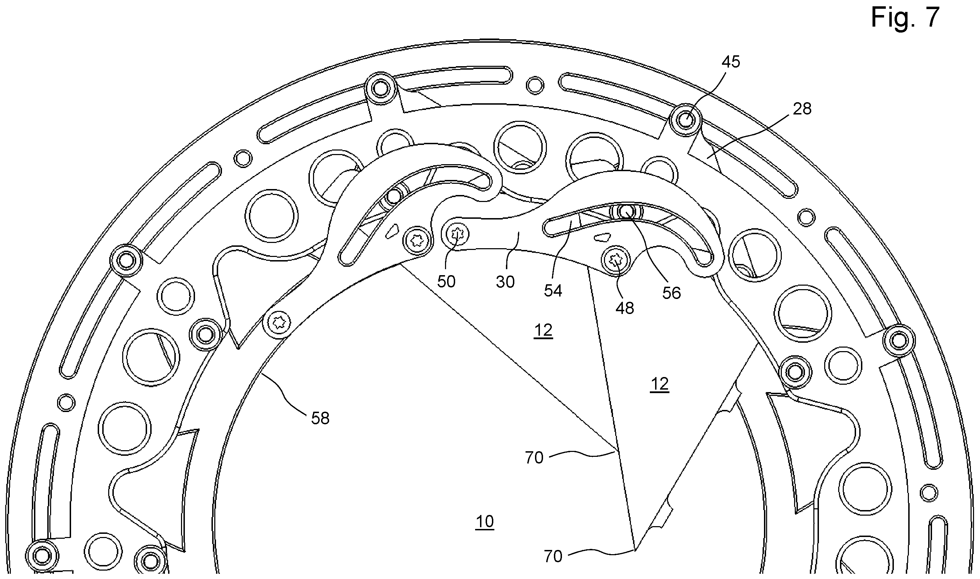

Die Figuren 6 bis 8 sind Draufsichten, ohne die zweite Basis 22, auf denen die Bewegungen anhand von zwei Segmenten einfacher nachvollziehbar sind, wenn der Verschlussmechanismus geöffnet wird.

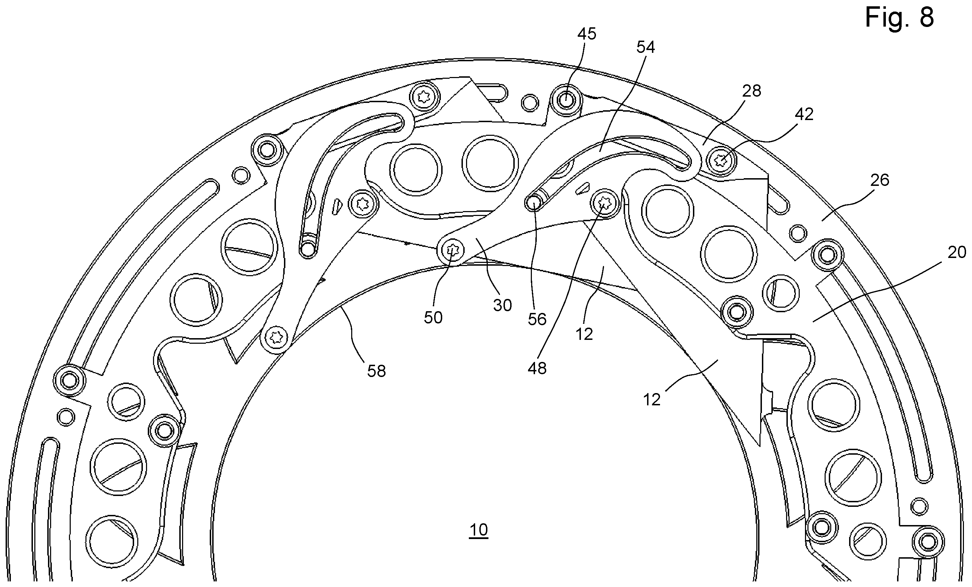

In Figur 8 ist gut zu erkennen, dass sämtliche Segmente 12 im vollständig geöffneten Zustand außerhalb des Außenrandes 58 liegen, sodass die Öffnung 10 durch den Außenrand 58 definiert ist. Die Drehbewegung zum vollständigen Öffnen umfasst hier sogar nur einen Winkelbereich von <70°, insbesondere <35°.

Die Spitzen 70 der im Wesentlichen dreiecksförmigen Segmente 12 bewegen sich beim Öffnungsvorgang auf einer gekrümmten Bahn nach außen, die sich durch die Hebelmimik verbunden mit der Kulissenbahn 54 zwangsweise ergibt.

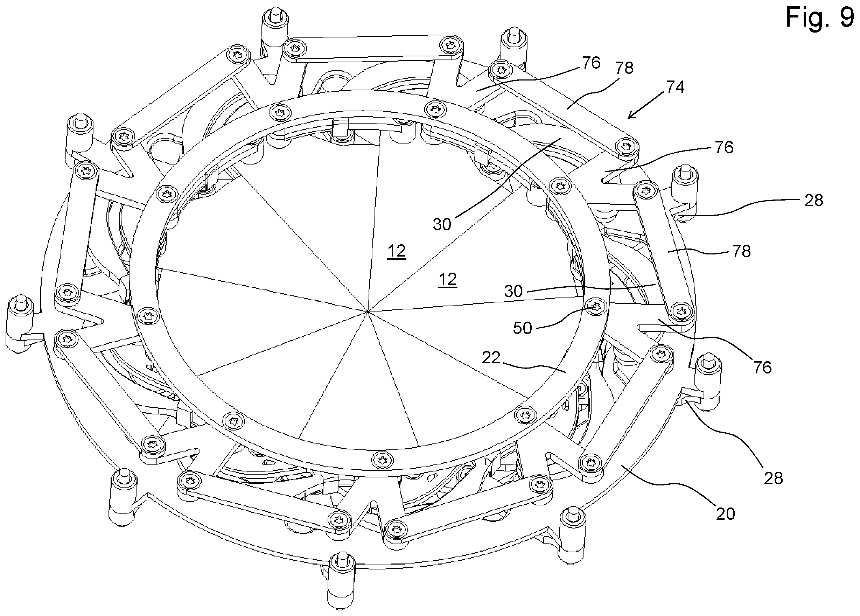

In Figur 9 sind die zweiten Schwenkhebel 30 untereinander über eine Koppelungsvorrichtung 74 miteinander mechanisch verbunden. Jeder zweite Schwenkhebel 30 ist mit einem in Umfangsrichtung vor ihm und nach ihm angrenzenden zweiten Schwenkhebel 30 mechanisch über die Koppelungsvorrichtung verbunden, sodass eine Synchronisierung der Bewegungen der zweiten Schwenkhebel 30 zusätzlich zur Koppelung über die erste Basis 20 erfolgt.

Die Koppelungsvorrichtung 74 umfasst einen einstückig im Bereich des zweiten Schwenklagers angeformten Hebel 76, der sich zum Beispiel V-förmig aufzweigen kann. Am Hebel 76 ist schwenkbar eine Koppelstange 78 angebracht, die zu einem entgegen dem Uhrzeigersinn benachbarten Hebel 76 verläuft und dort schwenkbar angebracht ist. Eine zweite Koppelstange 78 verläuft im Uhrzeigersinn von einem anderen Arm des Hebels 76 zu einem Hebel 76 des in dieser Richtung benachbarten zweiten Schwenkhebels 30.

Der Vorteil dieser Anordnung liegt darin, dass durch die Synchronisierung der gleichen ersten oder zweiten Schwenkhebel 28, 30 eine Drehlagerung zwischen der ersten und der zweiten Basis 20, 22 entfallen kann, weil die Basen 20, 22 in dieser Anordnung durch die Synchronisierung zueinander zentriert werden. Somit können auch die kreissegmentförmigen Kulissenführungen 38 entfallen.

Anstatt der Koppelstangen 78 könnte die Koppelungsvorrichtung 74 zum Beispiel auch durch Zahnräder realisiert werden, die die zweiten Schwenkhebel 30 miteinander fest koppeln.

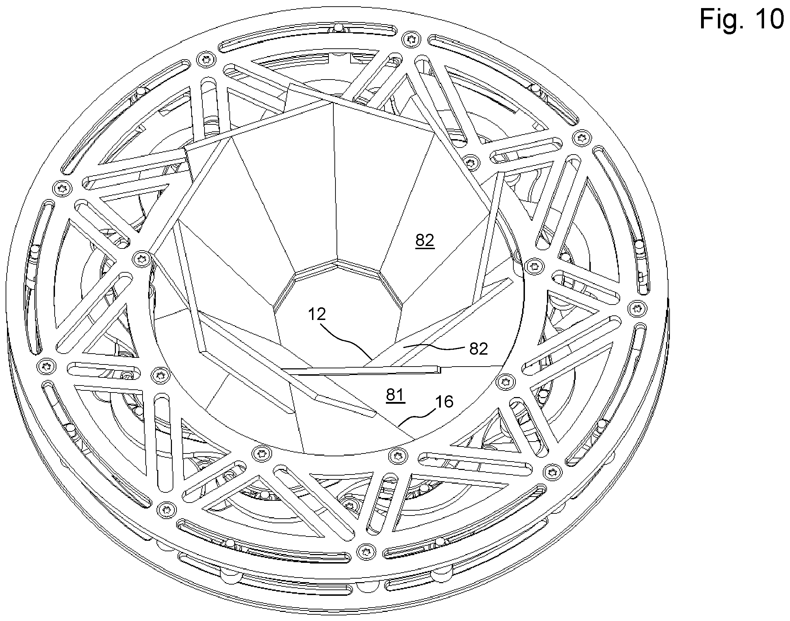

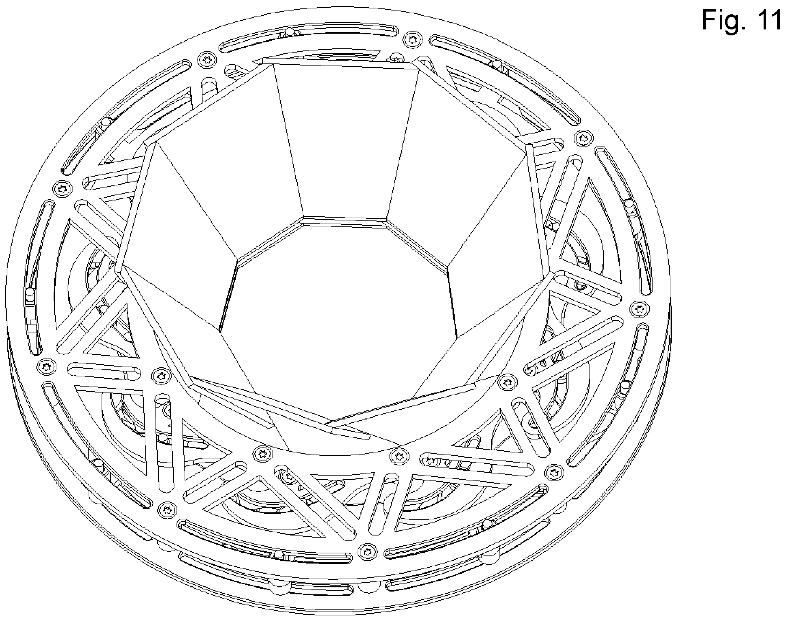

Die Figuren 10 und 11 zeigen eine weitere Variante der Erfindung, bei der die Segmente 12 jeweils an einer Seitenfläche 16 axial vorspringende Wände angeformt haben. Diese Wände erstrecken sich in axialer Richtung A entweder parallel zur Richtung A oder leicht schräg hierzu, wobei die schräge Variante in den Figuren 10 und 11 gezeigt ist. Die Segmente 12 teilen sich somit in einen in einer gemeinsamen Ebene liegenden Verschlussabschnitt 81 sowie einen daran angebrachten Rohrsegmentabschnitt 82 auf. Je nachdem, ob diese Rohrsegmentabschnitte exakt in Axialrichtung A ausgerichtet sind, ergänzen sie sich in sämtlichen Stellungen der Segmente 12 zu einem im Querschnitt polygonartigen Rohr mit variablem Querschnitt oder, falls sie leicht schräg stehen, zu einem Trichter, wie er in Figur 10 gezeigt ist. Auch hier hat der Trichter einen variablen Querschnitt, wie aus dem Vergleich der Figuren 10 und 11 zu erkennen ist.

Diese Variante ist insbesondere dann vorteilhaft, wenn der Verschlussmechanismus in einer Anlage zum Abfüllen von Schüttgut eingesetzt wird. Dieses Schüttgut strömt von oben in das Rohr oder den Trichter.

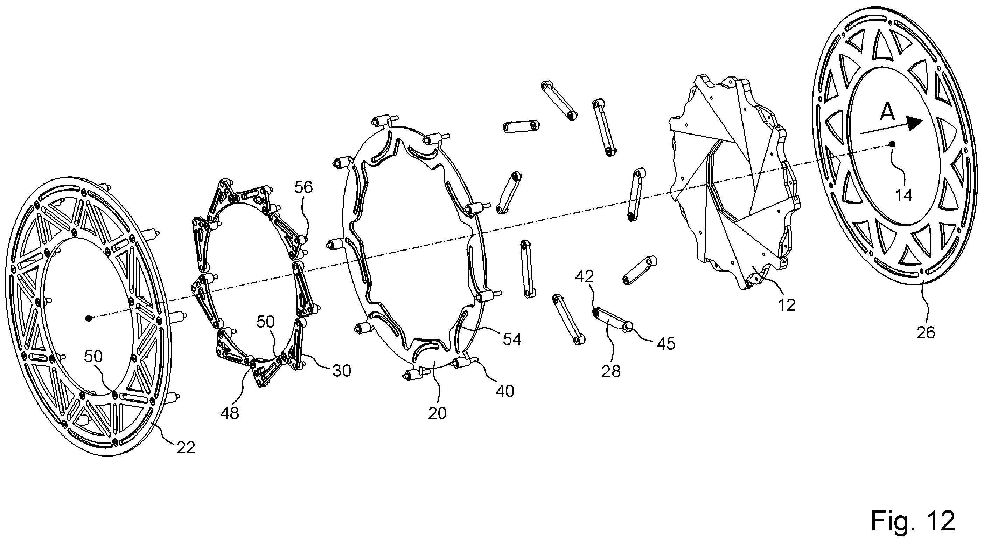

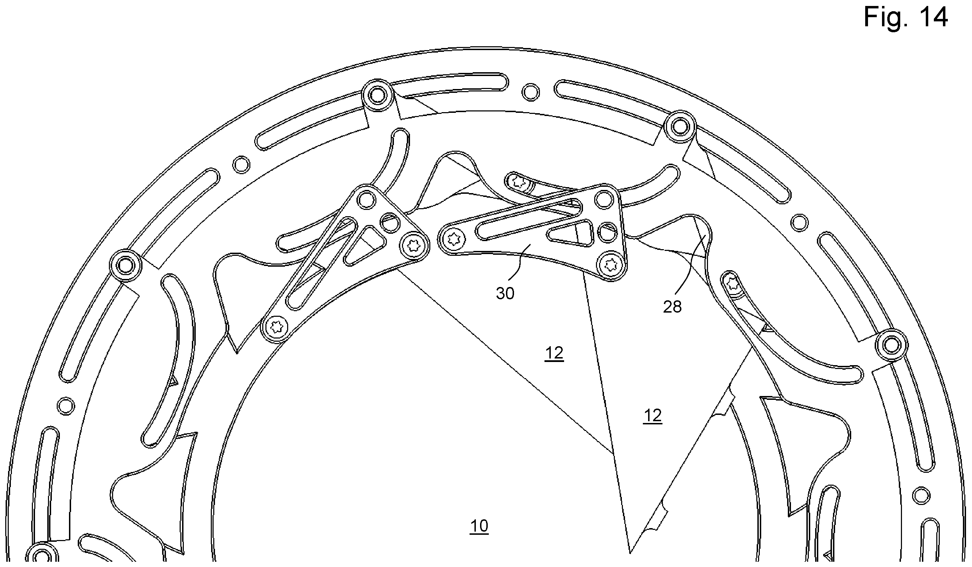

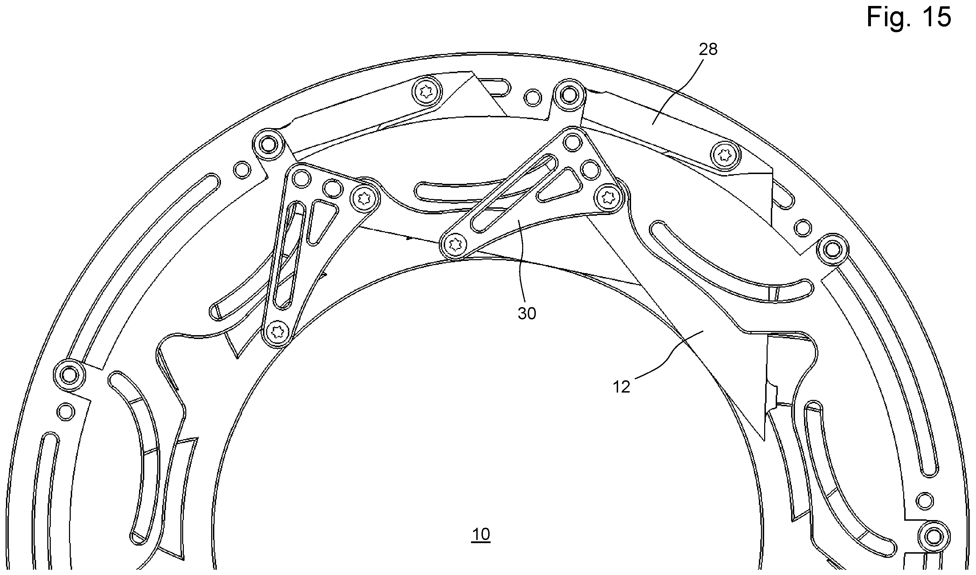

Die Ausführungsform nach den Figuren 12 bis 15 basiert auf der Ausführungsform nach den Figuren 1 bis 8, wobei hier jedoch eine Umkehr der Bewegungssysteme dahingehend erfolgt, dass die Kulissenbahn 54 für jedes Segment 12 nicht im zweiten Schwenkhebel 30 ausgebildet ist, sondern in der ersten Basis 20. Dafür haben die zweiten Schwenkhebel 30 jedoch jeweils einen vorstehenden Fortsatz 56 (siehe Figur 12), der in die zugeordnete Kulissenbahn 54 hineinragt.

Ansonsten sind auch hier die zweiten Schwenkhebel 30 über jeweils einen zweiten Anlenkpunkt 48 mit ihrem Segment und über ein zweites Schwenklager 50 mit der zweiten Basis 22 verbunden. Dasselbe gilt auch für die ersten Schwenkhebel 28 und ihre ersten Anlenkpunkte 42 sowie die ersten Schwenklager 45, die sie mit der ersten Basis 20 verbinden.

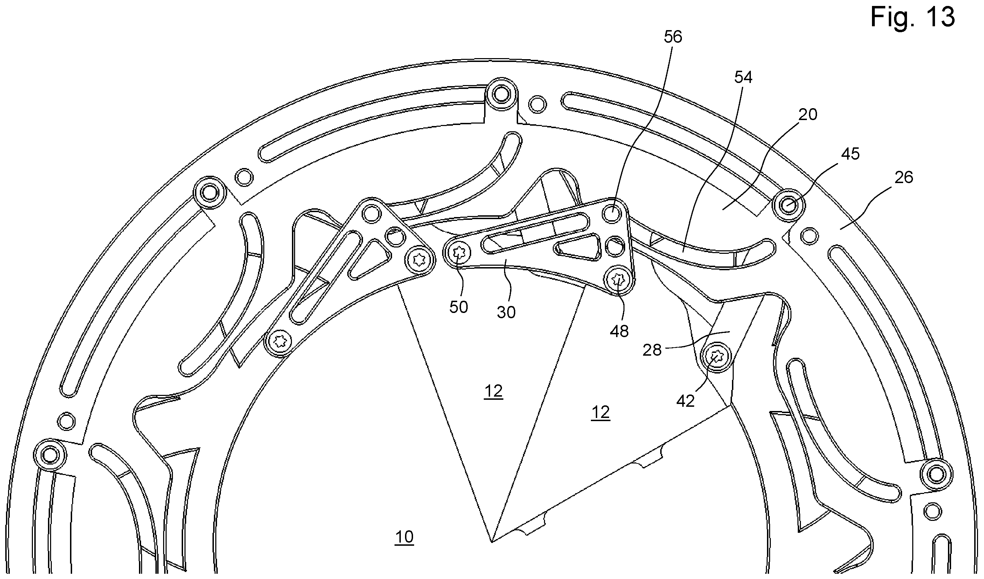

In den Figuren 13 bis 15 sind die Bewegungsabläufe beim Drehen der ersten Basis 20 relativ zur zweiten Basis 22 zu sehen, die zu einem Öffnungsvorgang führen, der entsprechend der ersten Ausführungsform nach den Figuren 1 bis 8 entspricht. Für die bessere Übersichtlichkeit ist die zweite Basis 22 weggelassen, die dritte Basis 26 ist jedoch zu sehen. Auf Details muss hierbei nicht eingegangen werden, sämtliche Vorteile und Einzelmerkmale bis auf die Vertauschung von Kulissenbahn 54 und Fortsatz 56 entsprechen der ersten Ausführungsform.

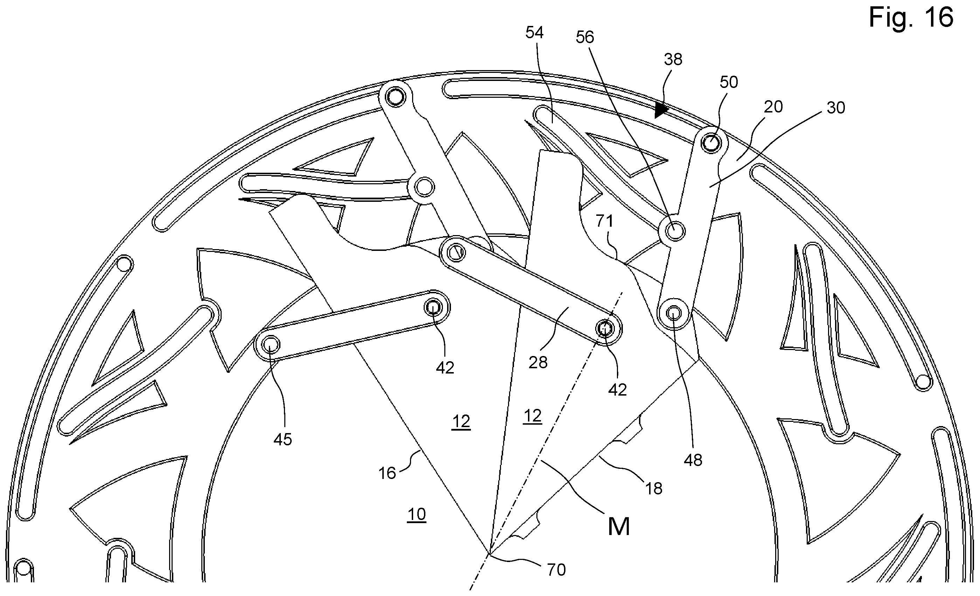

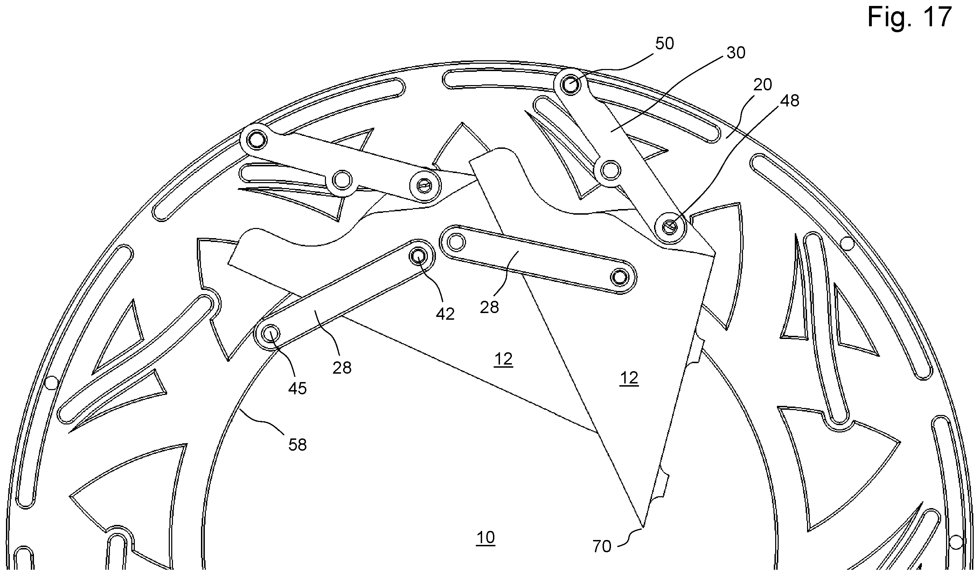

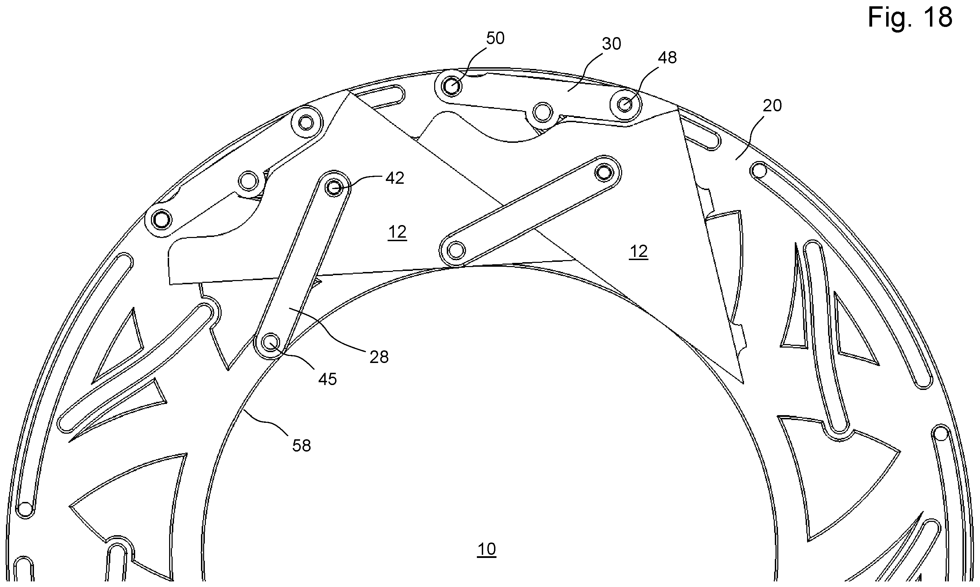

Bei der Ausführungsform nach den Figuren 16 bis 18 wird, wenn mit Figur 1 verglichen wird, jeder im geschlossenen Zustand steiler stehende Schwenkhebel mit dem Kurvengetriebe gekoppelt, wogegen der vorher als Kulissenhebel ausgeführte und im geschlossenen Zustand des Verschlussmechanismus flacher stehende Schwenkhebel zum reinen Schwenkhebel wird, ähnlich wie der Schwenkhebel 28 in Figur 1. Ferner wird die Kulissenbahn 54 in den Ring gelegt, der in Figur 1 die zweite Basis 22 bildete oder den, der die dritte Basis 26 bildete.

Dies bedeutet, von der Nomenklatur her vertauschen sich erste und zweite Schwenkhebel 28, 30 sowie die erste und die zweite Basis 20, 22, verglichen zu Figur 1. Die erste Basis 20 weist nun die Kulissenführung 38 auf, das heißt die erste und die zweite Basis tauschen ihre Anordnung im Vergleich zu den Figuren 1 und 12. Die in Figur 12 erste Basis 20, die den angetriebenen Teil des Verschlussmechanismus darstellt, hat die Kulissenbahnen 54 für alle zweiten Schwenkhebel 30, wobei diese Schwenkhebel 30 jeweils einen Fortsatz 56 besitzen, der in die zugeordnete Kulissenbahn 54 eindringt.

Die zweiten Anlenkpunkte 48 der zweiten Schwenkhebel 30 liegen nun in einem Eckbereich zwischen Umfangsrand 71 und Seitenfläche 18, wogegen die ersten Anlenkpunkte 42 der ersten Schwenkhebel 28 nun im Bereich einer Mittellinie M verlaufen, die die Winkelhalbierende ausgehend von der Spitze 70 zwischen den Seitenflächen 16, 18 darstellt.

Die ersten Schwenklager 45 sind hier an der ersten Basis 20 gelagert. Die zweite, zur Erhöhung der Übersichtlichkeit weggelassene Basis 22 wird vorliegend angetrieben und bewegt die zweiten Schwenklager 50. Auch hier ist wieder zu erkennen, dass die Kulissenbahn 54 eine sehr geringe Krümmung und einen flachen Winkel relativ zu einer Tangente zum Kreis durch den Fortsatz 56 hat, sodass ein Klemmen verhindert wird und zudem bei der Bewegung der zweiten Basis 22 in Umfangsrichtung eine sehr gute Keilwirkung erreicht wird. Die verschiedenen Öffnungsschritte und Bewegungsbahnen der Segmente 12 ergeben sich aus dem Vergleich der Figuren 16 bis 18.

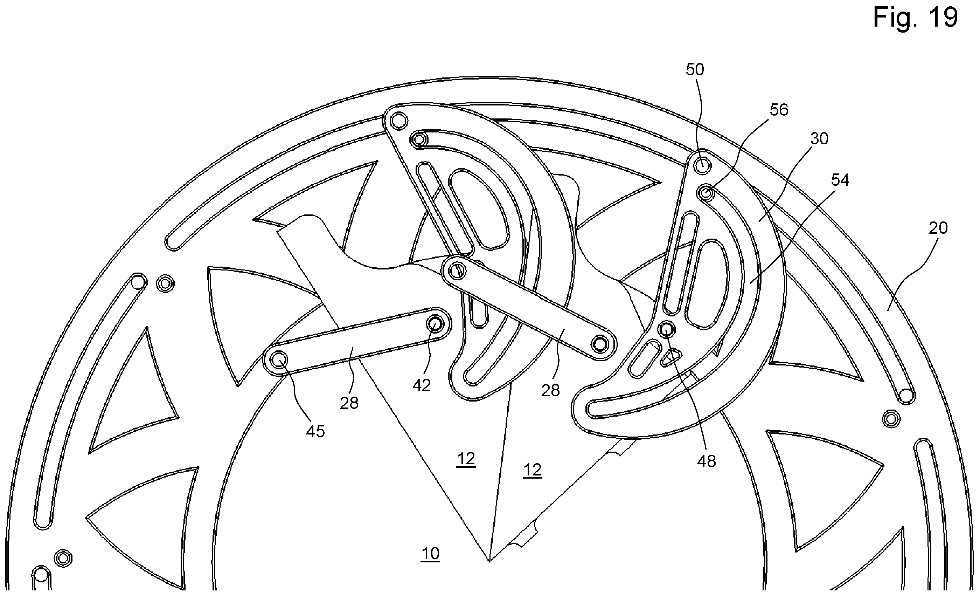

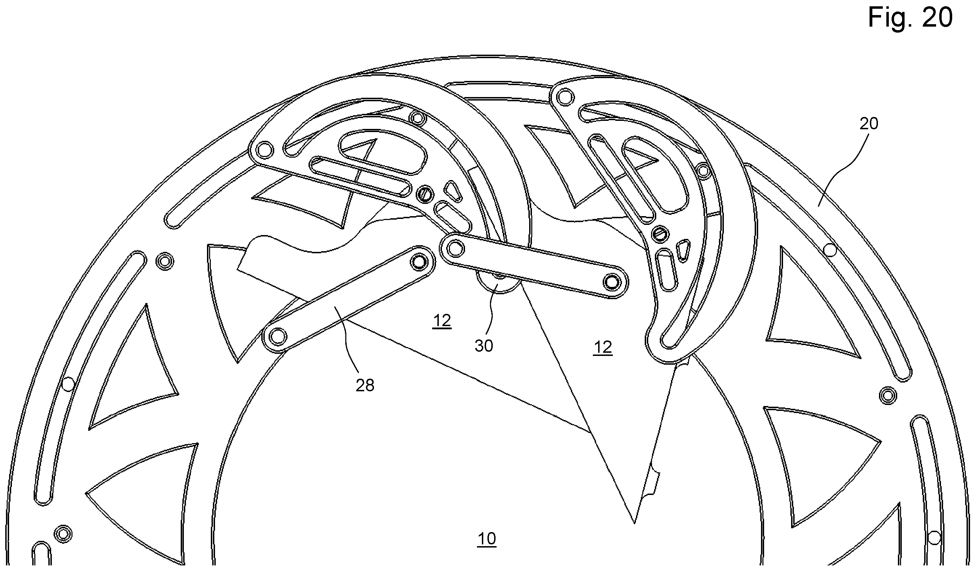

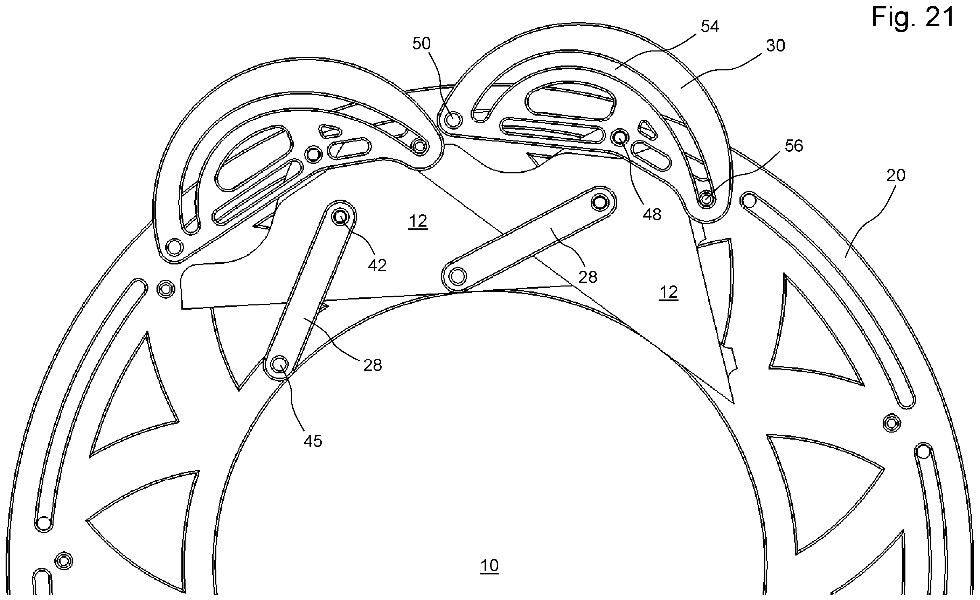

Die Ausführungsform nach den Figuren 19 bis 21 entspricht im Wesentlichen der nach den Figuren 16 bis 18, wobei hier jedoch erneut die Kulissenbahn 54 im Schwenkhebel 30 ausgebildet ist. Jedoch ist auch hier der Schwenkhebel 30 im Gegensatz zu der Ausführungsform nach den Figuren 1 bis 8 der im geschlossenen Zustand steiler stehende und damit näher zur Radialen stehende Schwenkhebel.

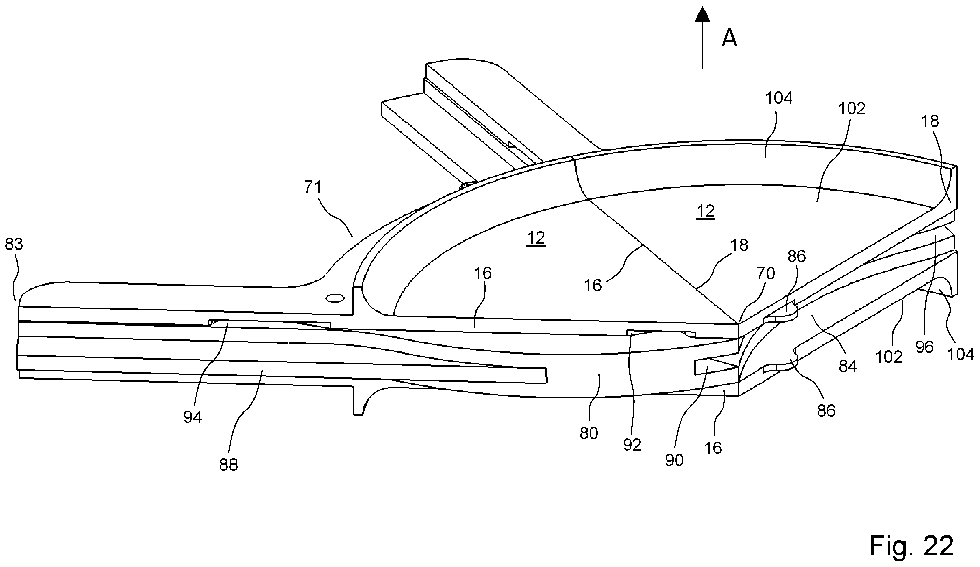

Die Figuren 22 bis 25 zeigen eine spezielle Variante, bei der die benachbarten Segmente 12 im Bereich ihrer Seitenflächen 16, 18 ineinandergreifen, um die Segmente in axialer Richtung A miteinander permanent zu koppeln und um zusätzlich eine optimale Dichtwirkung herbeizuführen. In der folgenden Ausführungsform hat jedes Segment 12 auf einer Seitenfläche 16 beginnend von der Spitze 70 eine konvexe Ausbauchung 80, die sich nur über einen Teil der axialen Höhe erstreckt. Das bedeutet, bezogen auf Figur 22, dass oberhalb und unterhalb der Ausbauchung 80 noch ein ebener und in Draufsicht linearer Abschnitt der Seitenfläche 16 vorhanden ist.

Dieser lineare und ebene Abschnitt ober- und unterhalb der Ausbauchung 80 erstreckt sich von der Spitze zum Beispiel bis zum entgegengesetzten Ende 83.

Die Ausbauchung 80 erstreckt sich über den ebenen Abschnitt des Segments, der im geschlossenen Zustand die Öffnung 10 in axialer Richtung A gesehen verschließt, und verläuft dann wieder zum ebenen Abschnitt der Seitenfläche 16 zurück.

Je nach Anwendungsfall und Abstimmung des Verschlussmechanismus kann die Ausbauchung 80 unterschiedliche Dicken (d.h. maximale Abstände von dem ebenen Abschnitt der Seitenfläche 16) und/oder Längen und Konturverläufe haben. Ebenso gibt es Ausführungsformen, bei denen die Ausbauchung 80 am radial vorderen und hinteren Ende unterschiedlich weit aus dem ebenen Abschnitt der Seitenfläche 16 heraussteht. Es kann beispielsweise am radial äußeren Ende der Ausbauchung 80 noch eine Restdicke beibehalten werden, die dem gewünschten Abstand der Seitenflächen 16 und 18 zueinander entspricht, der für die Gestaltung eines Dichtsystems vorteilhaft ist.

Die entgegengesetzte Seitenfläche 18 jedes Segments hat eine zur Ausbauchung 80 komplementäre konkave Einbuchtung 84, in die im geschlossenen Zustand die Ausbauchung 80 eindringt. Auch hier ist oberhalb und unterhalb der Einbuchtung 84 noch ein ebener und in Draufsicht linearer Abschnitt der Seitenfläche 18 vorhanden, der sich von der Spitze 70 zum Beispiel bis ganz radial nach außen erstreckt.

Die Seitenfläche 18 hat oberhalb und unterhalb der Einbuchtung, das heißt in axialer Richtung A beidseits der Einbuchtung 84 nahe der Spitze 70 in Umfangsrichtung vorstehende Führungsnasen 86, deren Abstand minimal größer als die axiale Dicke der Ausbauchung 80 ist.

Von der in Umfangsrichtung am weitesten vorstehenden Stelle der Ausbauchung 80 aus erstreckt sich ein in die Ausbauchung 80 übergehender angeformter Führungssteg 88 radial nach außen, der in etwa in der axialen Mitte der Ausbauchung 80 positioniert ist und eine geringere Dicke als die Ausbauchung 80 besitzt. Dieser Führungssteg 88 kann sogar bis zum Ende 83 verlaufen.

Jedes Segment 12 ist im Bereich der Spitze 70 in der axialen Höhe des linearen Führungsstegs 88 mit einer spitzenseitigen Nut 90 versehen, deren axiale Höhe minimal größer als die axiale Höhe des Führungsstegs 88 ist. Dementsprechend erstreckt sich die spitzenseitige Nut 90 auch in einen Teil der Ausbauchung 80.

Die Ausbauchung 80 und die Einbuchtung 84 sowie der Führungssteg 88 und die spitzenseitige Nut 90 arbeiten jeweils paarweise zusammen, um einerseits eine axiale Koppelung der Segmente und andererseits eine Dichtwirkung während der Öffnungsbewegung zu erreichen, wie dies nachfolgend erklärt ist.

Ober- und unterhalb der Ausbauchung 80 ist in der Seitenfläche 16 noch eine Vertiefung 92 vorhanden, in die jeweils eine zugeordnete Führungsnase 86 des benachbarten Segments 12 eintauchen kann.

Ferner sind radial außerhalb und nach der Ausbauchung 80 ober- und unterhalb des Führungsstegs 88 ebenfalls Ausnehmungen 94 vorhanden, die deutlich radial länger als die Führungsnasen 86 sind, in die die Führungsnasen eindringen können, wenn die Segmente im geöffneten Zustand sind. Dies wird anhand der nachfolgenden Figuren während des Öffnungsvorgangs erläutert.

Im geschlossen Zustand liegen die Ausbauchungen 80 in den komplementären Einbuchtungen 84 des benachbarten Segments 12 und die Führungsnasen 86 in den Vertiefungen 92. In der Einbuchtung 84 ist etwa in der Mitte, in axialer Höhe des Führungsstegs 88, noch eine Nut 96 vorgesehen, in der dann im geschlossenen Zustand und während der Öffnungsbewegung der Führungssteg 88 ebenfalls aufgenommen werden kann, sodass auch im radial äußeren Bereich zwischen benachbarten Segmenten 12 kein Spalt auftreten kann, durch den man in axialer Richtung hindurch blicken kann.

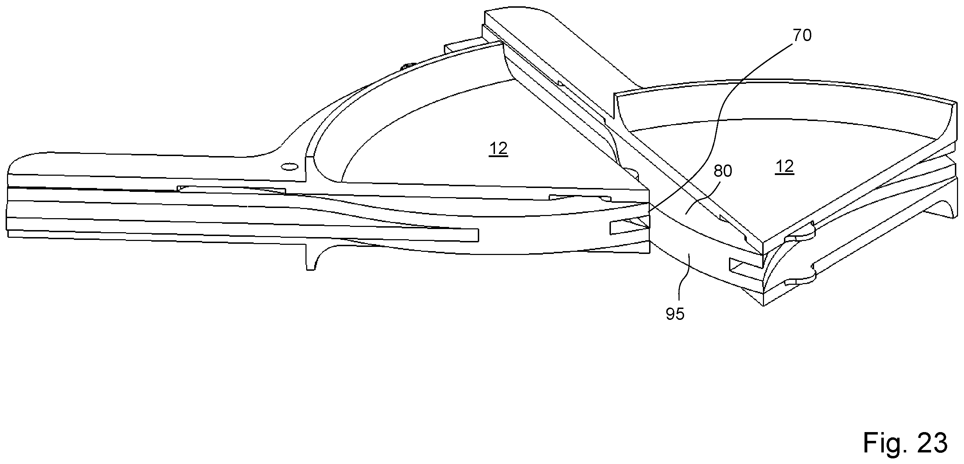

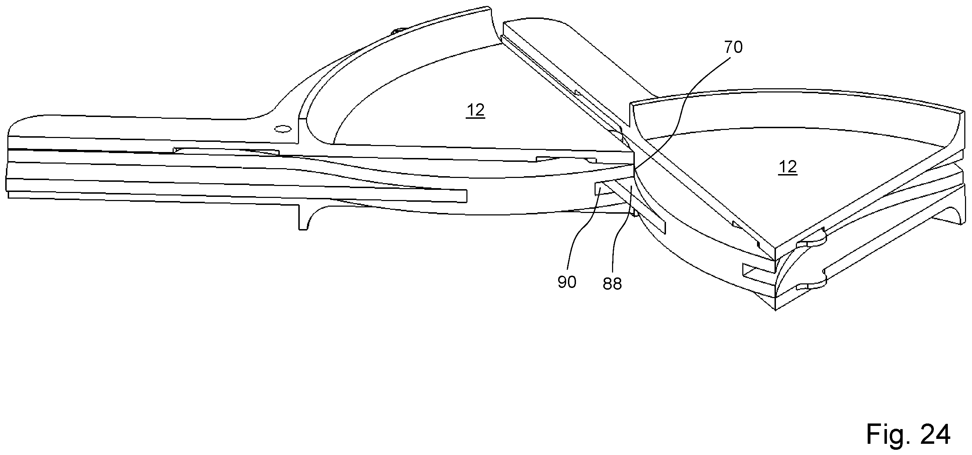

Während des Öffnungsvorgangs kann es, je nach Steuerkurve, dazu kommen, dass die Spitze 70 nicht entlang des ebenen Abschnitts der benachbarten Seitenfläche 16 bewegt wird, sondern längs einer resultierenden Kurve, die exakt durch die Ausbauchung 80 im Relativkoordinatensystem des angrenzenden Segments 12 realisiert wird. Somit fährt die Spitze 70 entlang der Außenfläche 95 der Ausbauchung 80, wie in Figur 23 zu sehen ist. Dabei nehmen die Führungsnasen 86 die Ausbauchung 80 zwischen sich auf, weitgehend axial spielfrei. Es tritt kein Spalt zwischen den Segmenten 12 auf, wenn in axialer Richtung A auf die Segmente geblickt wird. Wenn dann ein Segment 12 mit seiner Spitze in Umfangsrichtung am weitesten entfernt von dem ebenen Abschnitt der Seitenfläche 16 radial nach außen gefahren ist, dringt der Führungssteg 88 in die Nut 90 ein, wie dies in Figur 24 zu sehen ist. Die Spitze 70 bleibt weiterhin sehr nahe an der Mantelfläche der Ausbauchung 80 oder kontaktiert diese sogar.

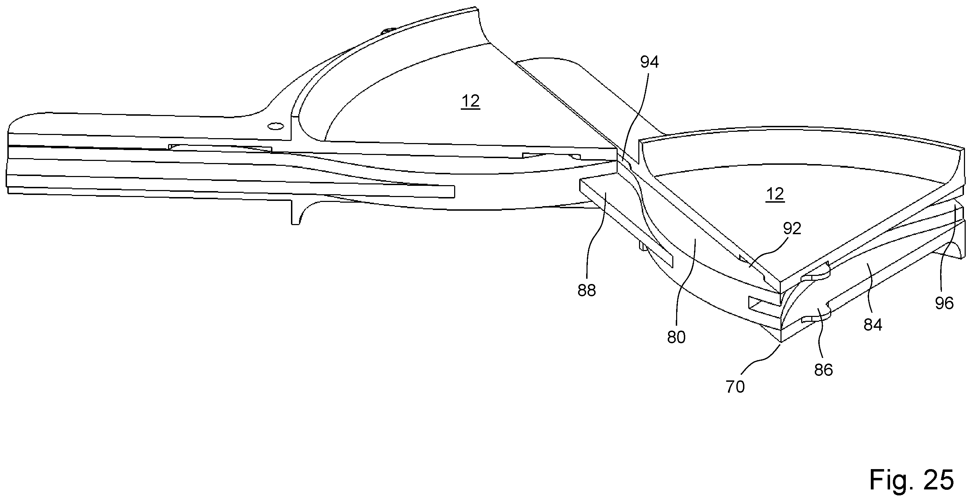

Wenn dann, wie in Figur 25 gezeigt, die Spitze 70 so weit am benachbarten Segment 12 entlanggefahren ist, dass sie nach der Ausbauchung 80 liegt, ist einerseits nach wie vor der Führungssteg 88 in der Nut 90 und der Nut 96 aufgenommen, und andererseits kann jede Führungsnase 86 in die lange Ausnehmung 94 eintauchen, wie dies in Figur 25 angedeutet ist. Die Nuten 90 und 96 können unterschiedliche Tiefen haben.

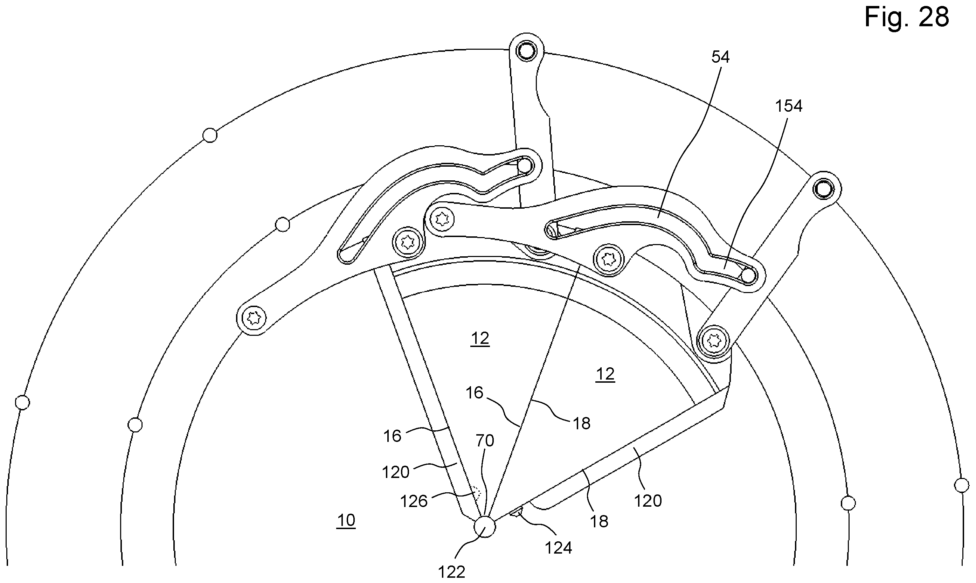

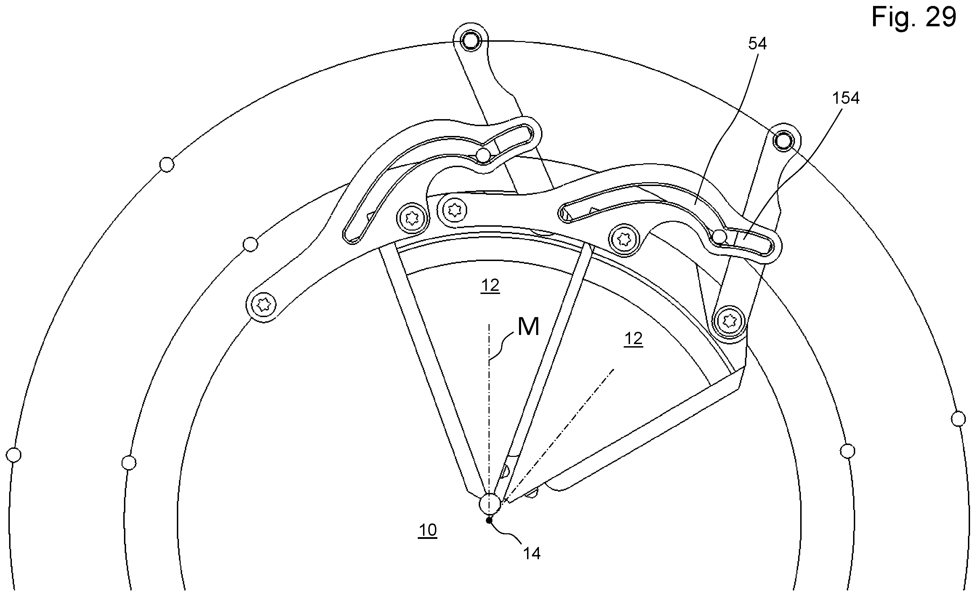

Die Führungsnasen 86 dienen optional im geschlossenen Zustand auch als Zentrierfortsatz, und die Vertiefungen 92 können auch als dazu komplementäre Ausnehmungen angesehen werden, wobei es auch noch eine andere Ausführungsform hierzu gibt, die später noch im Zusammenhang mit den Figuren 28 bis 30 erläutert wird.

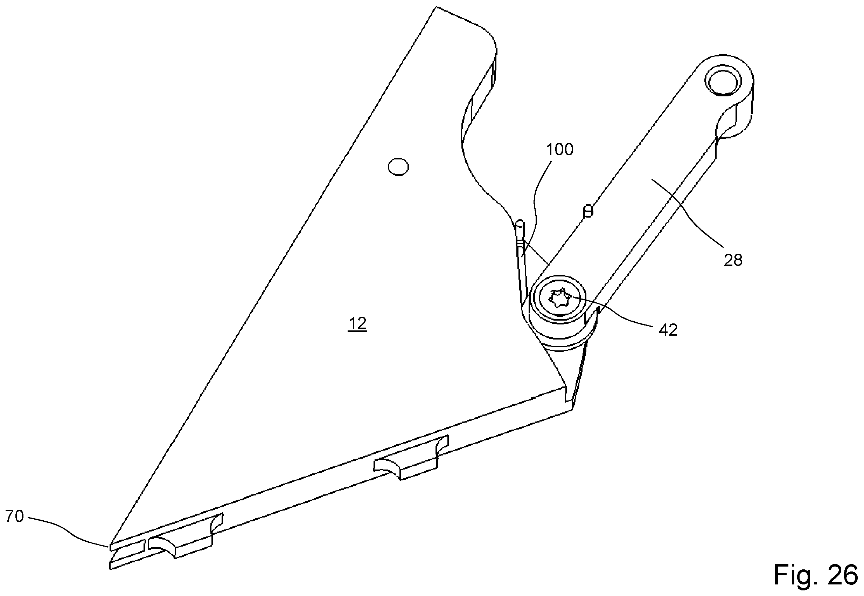

Um die Segmente 12 in eine Richtung vorzuspannen, kann eine Vorspannvorrichtung vorgesehen sein, zum Beispiel eine Torsionsfeder 100, wie sie in Figur 26 dargestellt ist. Die Torsionsfeder 100 ist an einem der Anlenkpunkte 42, 48, hier am Anlenkpunkt 42, vorgesehen und verspannt das Segment 12 zum zugehörigen Schwenkhebel, hier dem Schwenkhebel 28.

Hintergrund hierfür ist, dass ein leichtes Abheben der Spitzen 70 der Segmente 12 von den jeweils angrenzenden Seitenflächen des jeweils benachbarten anderen Segments 12, wie es zum Beispiel durch fertigungsbedingtes Spiel oder Toleranzen in den Gelenken auftreten kann, in manchen Anwendungsfällen nicht erwünscht ist und durch Vorspannen reduziert oder ganz vermieden werden kann.

Bei der Ausführungsform nach Figur 22 ist auch zu sehen, dass die Segmente 12 an ihrem äußeren Umfangsrand 71 zumindest in einer axialen Stirnfläche, hier an den entgegengesetzten axialen Stirnflächen 102, vorstehende Ränder 104 haben, die Kreissegmentabschnitte sind. Diese Ränder 104 ergänzen sich im geschlossenen Zustand zu einem geschlossen umlaufenden, kreisförmigen Ringfortsatz.

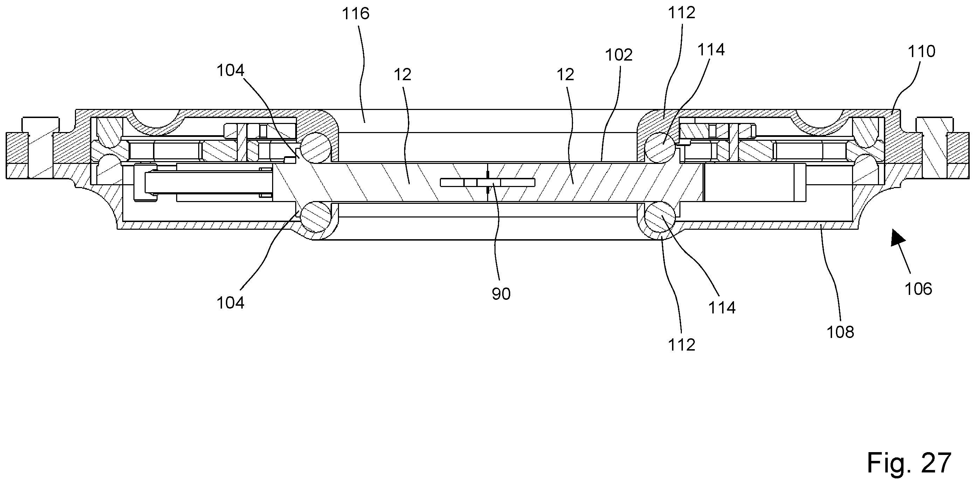

Der Verschlussmechanismus ist üblicherweise in ein Gehäuse 106, siehe Figur 27, eingebaut. Das Gehäuse 106 hat ein Loch 116, das mit der Öffnung 10 fluchtet. In dieser Ausführungsform ist das Gehäuse 106 mit zwei Schalen 108, 110 ausgeführt. Das Gehäuse 106 kann zum Beispiel eine Wand oder ein Teil einer Platte, eines Gerätes, einer Industrieanlage, eines Behälters oder einer Leitung sein, in der der Verschlussmechanismus operieren soll. Die Schalen 108, 110 umgeben die erste, die zweite und die dritte Basis, 20, 22, 26 und erstrecken sich am radial innenseitigen Rand auch über die vorstehenden Ränder 104 nach innen, um in Axialrichtung schließlich ganz nahe an die Stirnflächen 102 der Segmente zu gelangen. Im Querschnitt ergibt sich ein L-förmiger Dichtrand 112 an jeder Schale 108, 110, der eine Ringdichtung 114 aufnimmt.

Im geschlossenen Zustand des Verschlussmechanismus drücken die vorstehenden Ränder 104 gegen die zugeordnete Ringdichtung 114 und dichten den Verschlussmechanismus gegen das Gehäuse 106 ab.

Bei der Ausführungsform nach den Figuren 28 bis 30 haben die Segmente 12 zumindest an einer oder an beiden Seitenflächen 16, 18 eine feste oder elastische Rippe 120. Diese Rippe sorgt für eine in axialer Richtung gesehen geschlossene Kontur der durch die benachbarten Segmente gebildeten Öffnung 10 und kann auch die Funktion einer Dichtung übernehmen.

Zudem können, dies ist optional und nicht auf die Rippen 120 bezogen oder funktional mit diesen gekoppelt, eine oder mehrere Segmente 12 an der Spitze 70 eine zentrische Dichtung 122 haben, die dafür sorgt, dass das Zentrum 14 stets abgedichtet ist, selbst wenn die Spitzen 70 etwas abgenutzt sein sollten. Die Spitzen 70 drücken dann in die zentrische Dichtung 122, wenn der Verschlussmechanismus im geschlossenen Zustand ist.

Nahe der Spitzen 70 können, auch dies ist nicht auf diese Ausführungsform mit den Dichtungen beschränkt, beispielsweise an einer Seitenfläche 18 ein oder mehrere Zentrierfortsätze 124 in Umfangsrichtung vom Segment 12 vorstehen, die im geschlossenen Zustand in eine komplementäre Ausnehmung 126 beispielsweise in der anderen Seitenfläche 16 eindringen können, womit die zuvor bereits erwähnte mechanische Koppelung der Segmente und eine Zentrierung der Segmente zueinander in radialer Richtung möglich sind. Hierzu kann der Zentrierfortsatz konisch zulaufen, um die Zentrierfunktion zu vereinfachen.

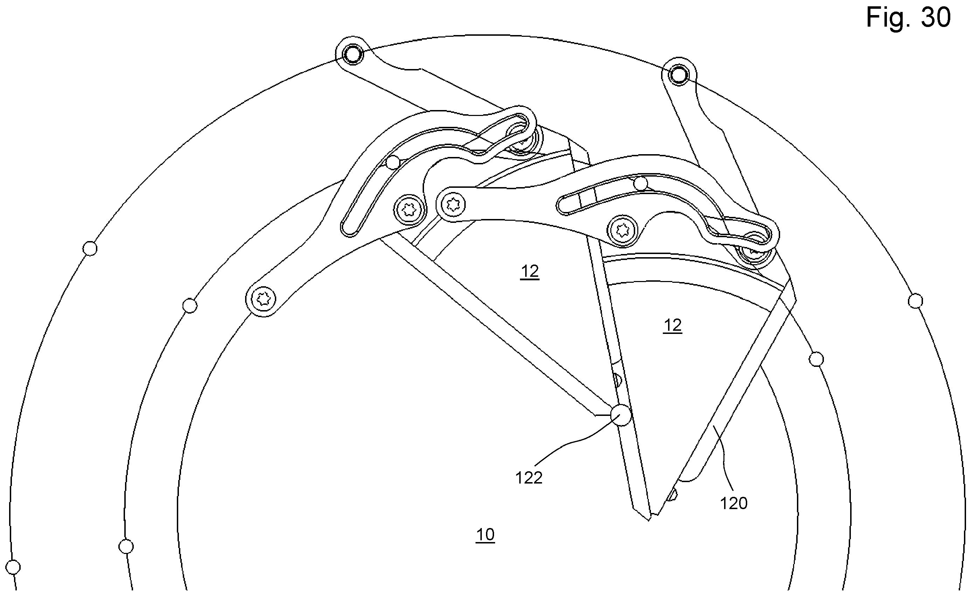

Zum Öffnen ist bei dieser Variante jedoch eine besondere Bewegung der Segmente optimal, denn der Zentrierfortsatz 124 hat in allen Richtungen aufgrund der konischen Form und der Form der komplementären Ausnehmung 126 kein Spiel. Aus diesem Grund kann keine Relativbewegung wie bei den übrigen Ausführungsformen, das heißt kein Entlanggleiten der benachbarten Seitenflächen 16, 18 benachbarter Segmente 12 zu Beginn des Öffnungsvorgangs erfolgen. Vielmehr müssen die Segmente 12 ohne seitliche Bewegungskomponente zueinander senkrecht voneinander wegbewegt werden, damit der Zentrierfortsatz 124 in seiner Längserstreckung gerade aus der Ausnehmung 126 herausfahren kann. Aus diesem Grund ist die Kulissenbahn 54 mit einem Kulissenbahnabschnitt 154 versehen, der zu Beginn des Öffnungsvorgangs wirkt. Die Kurve ist dabei so gestaltet, dass die Segmente 12 relativ zum Zentrum 14 rein radial nach außen bewegt werden, das heißt ihre Mittellinie M verfährt längs einer Radialen, sodass ohne Verschiebebewegung der Segmente 12 zueinander, die Segmente 12 zuerst einfach radial auseinandergehen. Sind die Zentrierfortsätze 124 dann außerhalb ihrer komplementären Ausnehmungen 126, kann die kombinierte und überlagerte Bewegung um mehrere Schwenkachsen erfolgen, wie dies in Figur 30 gezeigt ist. Aufgrund der Abstände der ebenen Teile der Seitenflächen 16, 18 zueinander und der Rippen 120 treten auch hier keine Spalte zwischen benachbarten Segmenten 12 auf, durch die man in axialer Richtung hindurch blicken kann.

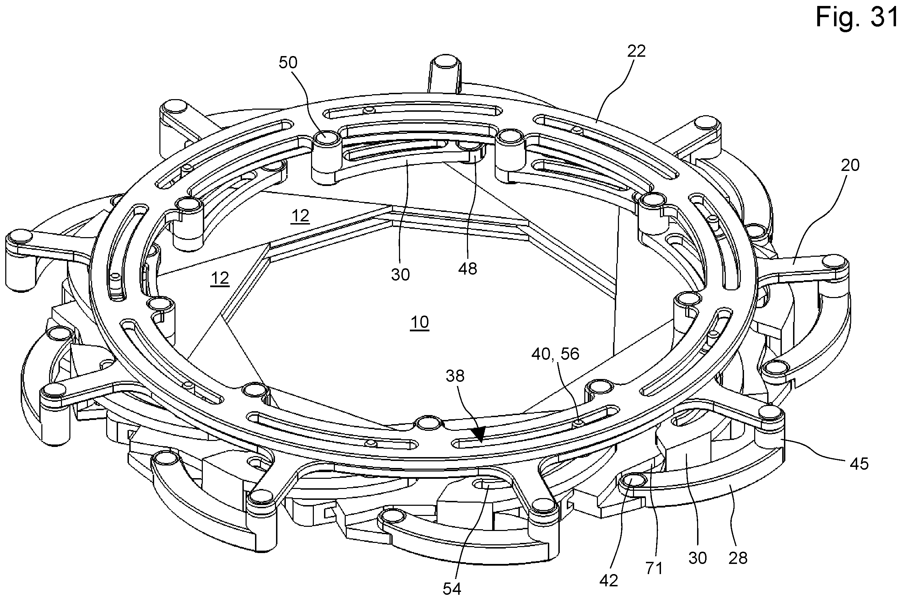

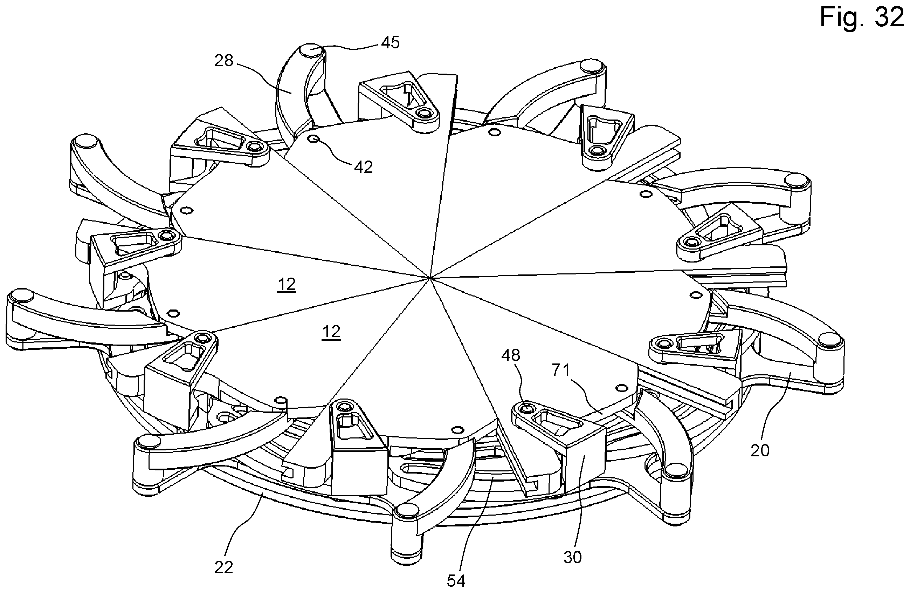

Die Ausführungsform nach den Figuren 31 bis 32 entspricht im Wesentlichen der nach Figur 1, wobei hier jedoch die Drehlagerung 44 mit den kreissegmentförmigen Kulissenführungen 38 und den in die Kulissenführungen 38 eingreifenden Vorsprüngen 40 radial weiter innen angeordnet ist und die Vorsprünge 40 gleichzeitig die Funktion der Fortsätze 56 übernehmen.

Des Weiteren sind die zweiten Schwenkhebel 30 in ihrer Form so ausgeführt, dass sie die Segmente 12 an ihrem äußeren Umfangsrand 71 umgreifen, so dass jedes Segment 12 axial zwischen axial beabstandeten Schenkeln des zweiten Schwenkhebels 30 liegt und der zweite Schwenkhebel 30 sein zugeordnetes Segment 12 von beiden axialen Seiten stabilisiert.

Das Schwenklager 45 zwischen dem ersten Schwenkhebel 28 und der ersten Basis 20 ist hier mit einem eigenen Vorsprung (nicht zu sehen) und einer Öffnung (nicht zu sehen) ausgebildet, in die der Vorsprung hineinragt. Dabei ist es auch hier unerheblich, ob der Vorsprung am Schwenkhebel 28 oder an der Basis 20 und die Öffnung am jeweils anderen Teil vorgesehen ist.

Die Segmente 12 können mit minimalem axialem Spiel zwischen den sich ausbildenden Schenkeln des zweiten Schwenkhebels 30 liegen und sie sogar bei axialer Belastung leicht kontaktieren, um abgestützt zu werden.

Die erste Basis 20 kann optional wie in Figur 31 gut zu sehen ist, vom Ring ausgehend sternförmige radial nach außen ragende Ausläufer besitzen, an denen die ersten Schwenklager 45 vorgesehen sind.

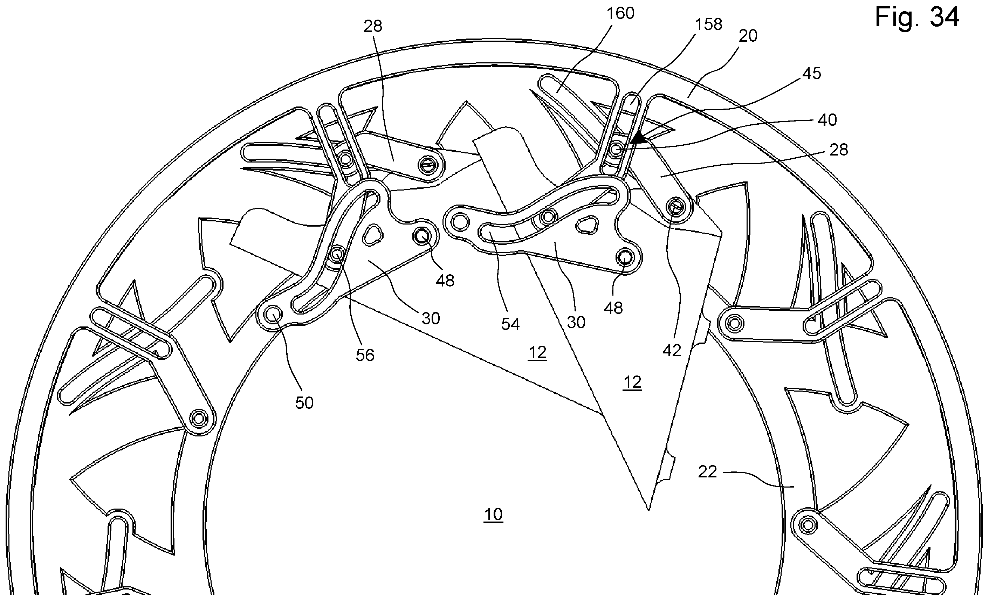

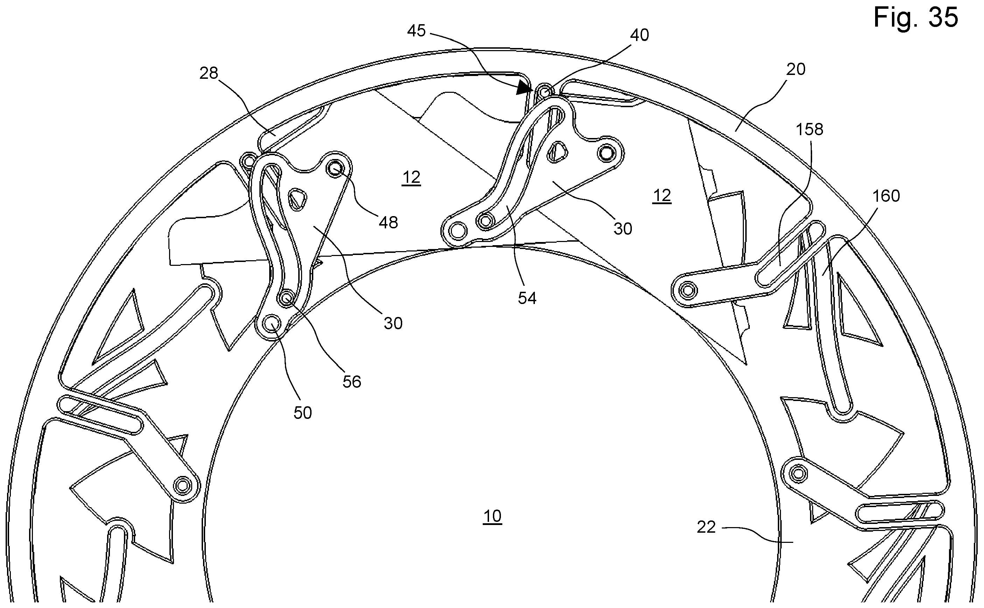

Die Ausführungsform nach den Figuren 33 bis 35 entspricht im Wesentlichen der ersten Ausführungsform. Die Figuren 33 bis 35 sind dabei ähnlich der Darstellungen in den Figuren 6 bis 8.

Bei dieser Variante werden jedoch die Vorsprünge 40 der Schwenklager 45 der ersten Schwenkhebel 28 nicht entlang einer Kreisbahn in der zweiten Basis 22 bewegt, sondern die Position der Vorsprünge 40 wird stattdessen durch sich relativ zueinander bewegende und sich in axialer Ansicht überschneidende Kurvenbahnen 158 (in der ersten Basis 20) und 160 (in der zweiten Basis 22) definiert, die zusammen mit dem zugeordneten Vorsprung 40 ein im Raum wanderndes Schwenklager 45 bilden. In axialer Ansicht ergibt sich ein wandernder Schnittpunkt zwischen den Kurvenbahnen 158 und 160, der die sich ändernde Position des Schwenklagers 45 und des Vorsprungs 40 festlegt. Die Kurvenbahnen 158, 160 sind hier Kulissenbahnen, was nicht einschränkend zu verstehen ist.

Die Kurvenbahnen 158, 160 können abschnittsweise oder komplett gekrümmt und/oder linear verlaufen.

In dieser Ausführungsform erfüllt ein das Schwenklager 45 mit definierender Vorsprung 40 eine Doppelfunktion. Der Vorsprung 40 ist Teil des Schwenklagers 45 zwischen dem ersten Schwenkhebel 28 und der ersten Basis 20 und wirkt als Koppelelement und Teil einer Kulissenführung zwischen dem ersten Schwenkhebel 28 und der zweiten Basis 22.

Diese Ausführungsform zeichnet sich dadurch aus, dass der Weg des Vorsprungs 40 und damit des Schwenklagers 45 frei gestaltet werden kann und nicht längs eines Kreissegments um das Zentrum verläuft.

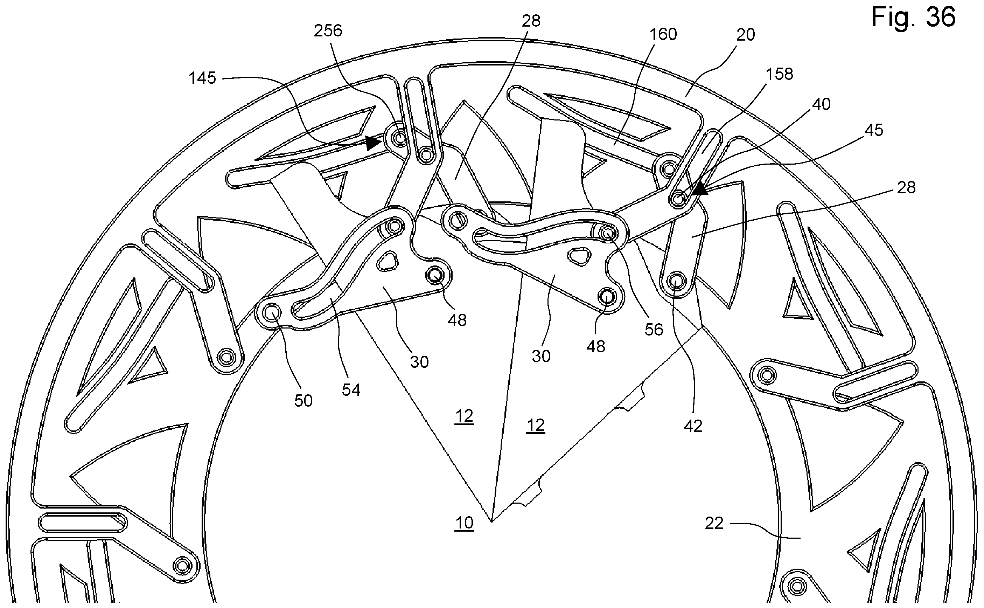

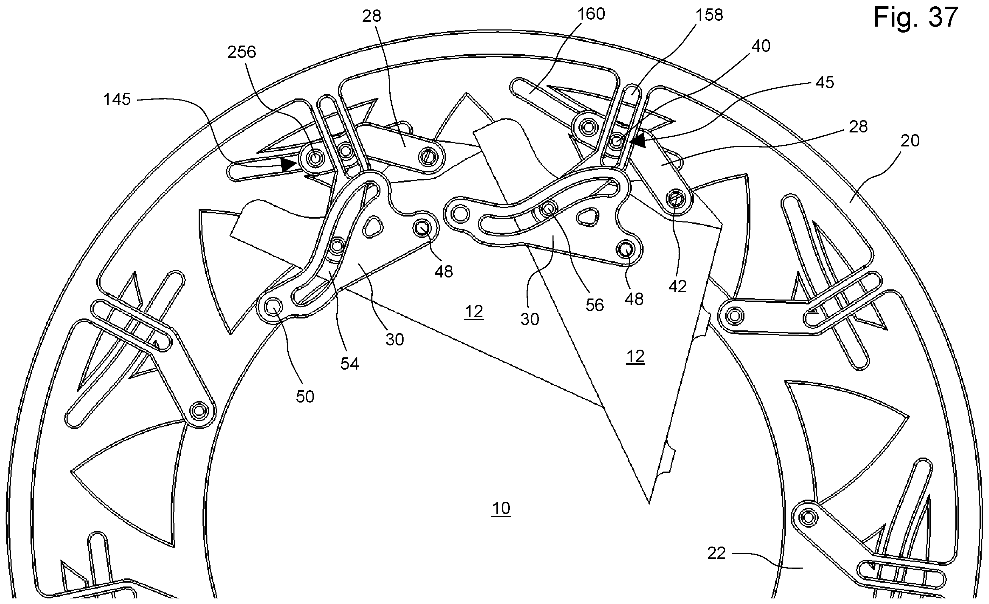

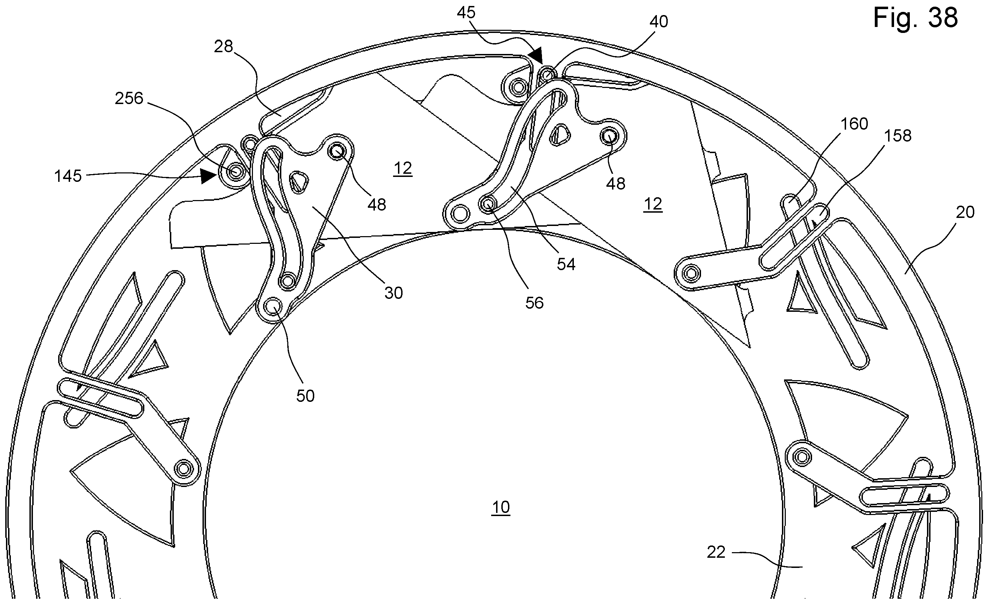

Die Ausführungsform nach den Figuren 36 bis 38 entspricht im Wesentlichen der nach den Figuren 33 bis 35, wobei hier die ersten Schwenkhebel 28 sowohl einen Vorsprung 40 haben, der durch die Kurvenbahn 158 (hier z.B. als Kulissenbahn ausgeführt) der ersten Basis 20 geführt ist, als auch einen Fortsatz 256, der durch die Kurvenbahn 160 (hier z.B. als Kulissenbahn ausgeführt) der zweiten Basis 22 geführt ist und mit der Kurvenbahn 160 ein weiteres Schwenklager 145 bildet. Die in den Figuren 33 bis 35 dargestellte Doppelfunktion des Vorsprungs 40 ist hier also aufgelöst.

Die Varianten nach den Figuren 33 bis 38 zeigen andere Anlenkungen und Ansteuerungen des ersten Schwenkhebels 28. Diese ersten Schwenkhebel 28 mit ihrer Anlenkung und ihrer Ansteuerung können natürlich beliebig auch mit zweiten Schwenkhebeln 30, wie sie in den vorherigen Ausführungsformen, insbesondere in den Figuren 6 bis 8 und 13 bis 21, gezeigt und beschrieben wurden, kombiniert werden.

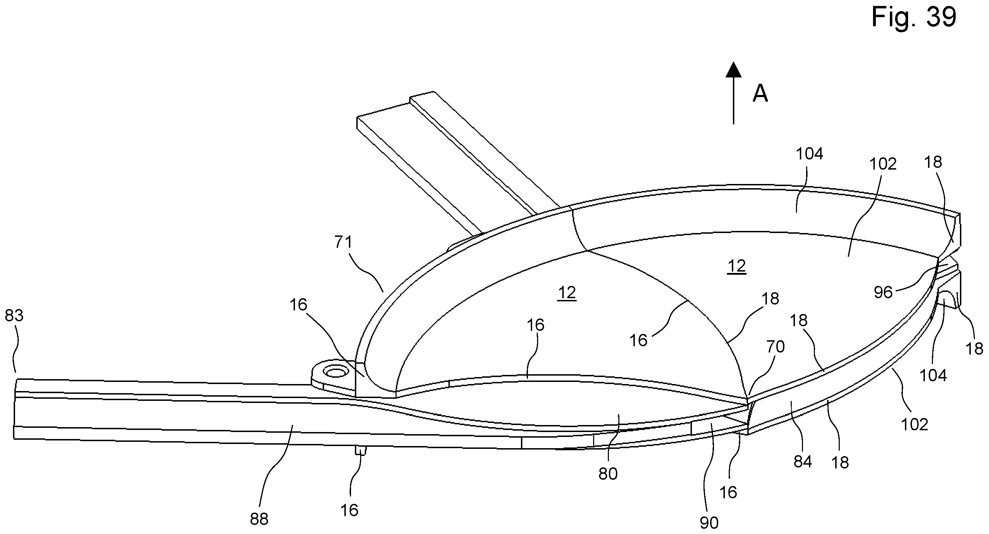

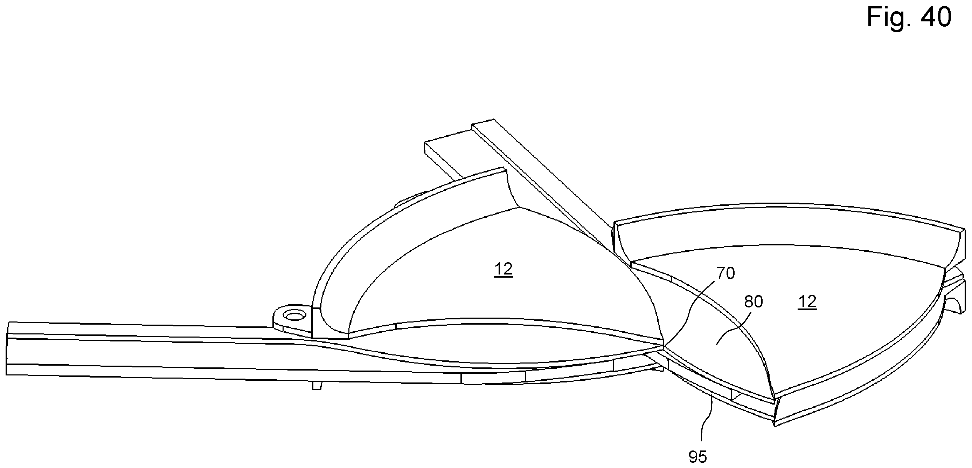

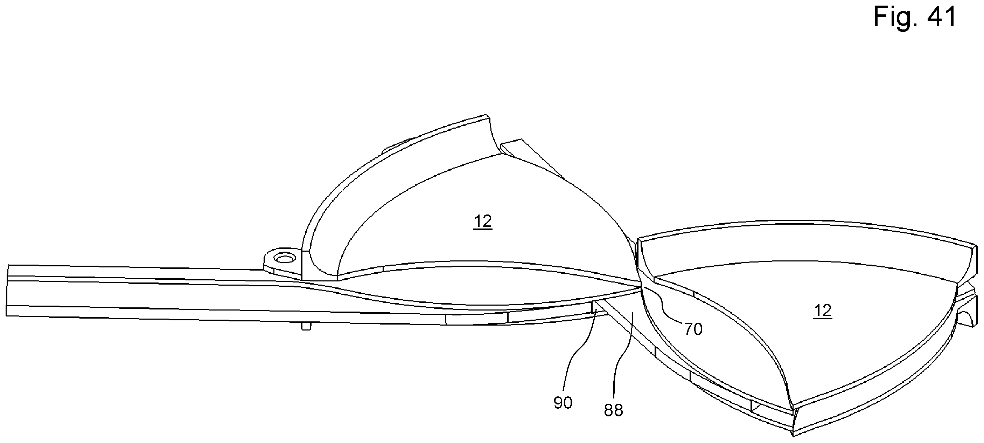

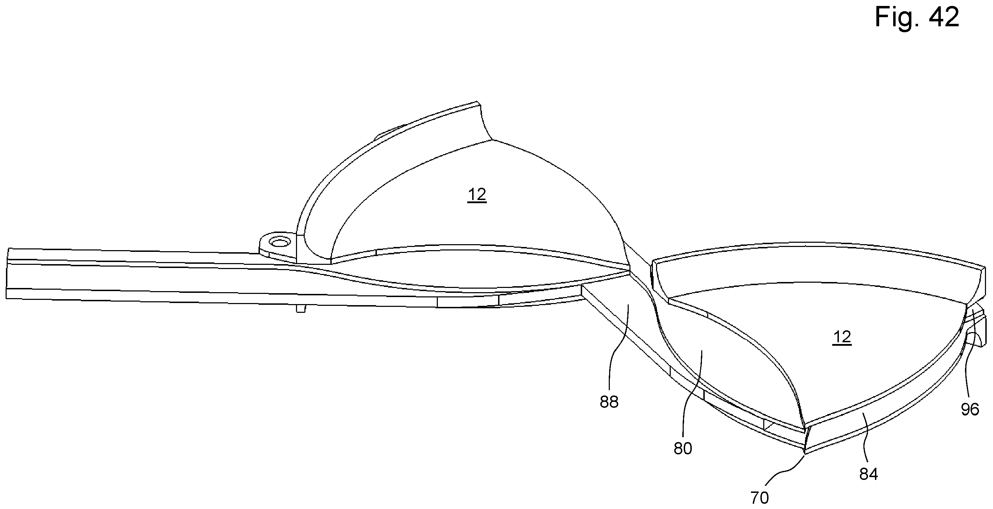

Die Ausführungsform nach den Figuren 39 bis 42 entspricht im Wesentlichen der nach den Figuren 22 bis 25, wobei hier eine während des gesamten Bewegungsablaufs wirkende Nut-Feder-Verbindung zwischen benachbarten Segmenten 12 vorhanden ist.

Die Seitenflächen 18 sind in Umfangsrichtung bogenförmig konvex geformt und haben in ihrer Mitte eine nutartige Einbuchtung 84.

Die gegenüberliegende Seitenfläche 16 des benachbarten Segments 12 sowie die entgegengesetzte Seitenfläche 16 desselben Segments 12 hingegen sind zu der konvexen Seitenfläche 18 komplementär konkav geformt und haben in ihrer axialen Mitte eine konvex verlaufende Ausbauchung 80, die in die nutartige Einbuchtung 84 des benachbarten Segments 12 eingreifen kann.

Der Führungssteg 88, welcher in axialer Richtung schmäler als die Ausbauchung 80 ist, setzt die Ausbauchung 80 radial nach außen fort und sorgt dafür, dass die benachbarten Segmente 12 stets nach dem Nut-Feder-Prinzip ineinander eingreifen.

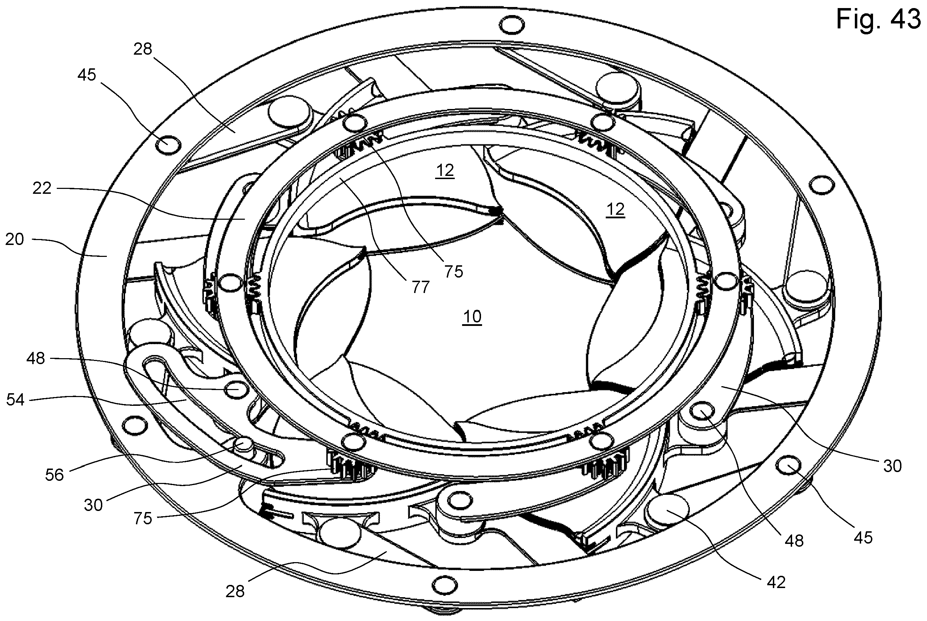

Die Ausführungsform nach Figur 43 entspricht im Wesentlichen der nach Figur 9, wobei hier die Koppelungsvorrichtung aus fest mit den zweiten Schwenkhebeln 30 verbundenen Verzahnungen 75 und einem mit einer Verzahnung bestückten Ringelement 77 besteht. Durch das mechanische Synchronisieren aller zweiten Schwenkhebel 30 mittels dieser Koppelungsvorrichtung können nun alle zweiten Schwenkhebel 30 über einen einzigen zweiten Schwenkhebel 30 über nur ein Kurvengetriebe mit der ersten Basis gekoppelt werden. Die durch das Kurvengetriebe des singulären zweiten Schwenkhebels 30 vorgegebene Bewegung wird auf die übrigen zweiten Schenkhebel 30 folglich über die besondere Koppelungsvorrichtung übertragen. Dadurch wird ein einfacherer Aufbau der restlichen zweiten Schwenkhebel 30 möglich. Das Ringelement 77 kann ähnlich einem Sonnenrad eines Planetengetriebes zwischen den Verzahnungen 75 gehalten werden oder wahlweise zusätzlich drehbar an der ersten Basis 20 oder an der zweiten Basis 22 gelagert werden. Die erste Basis 20 und die zweite Basis 22 werden beispielsweise wie bereits in Figur 31 beschrieben drehbar zueinander gelagert. Zur besseren Übersichtlichkeit wurden in Figur 43 keine solchen Drehlagerungen dargestellt.

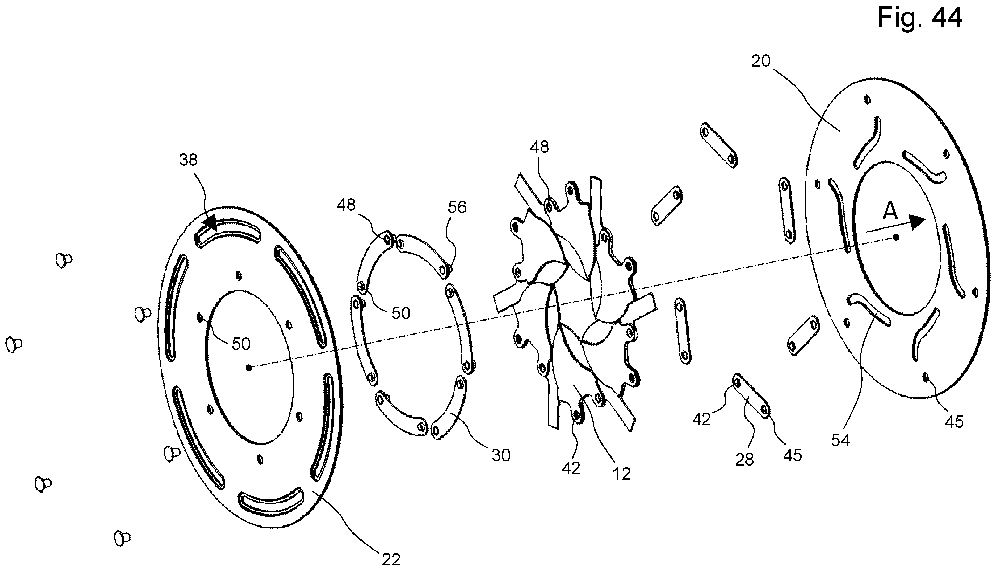

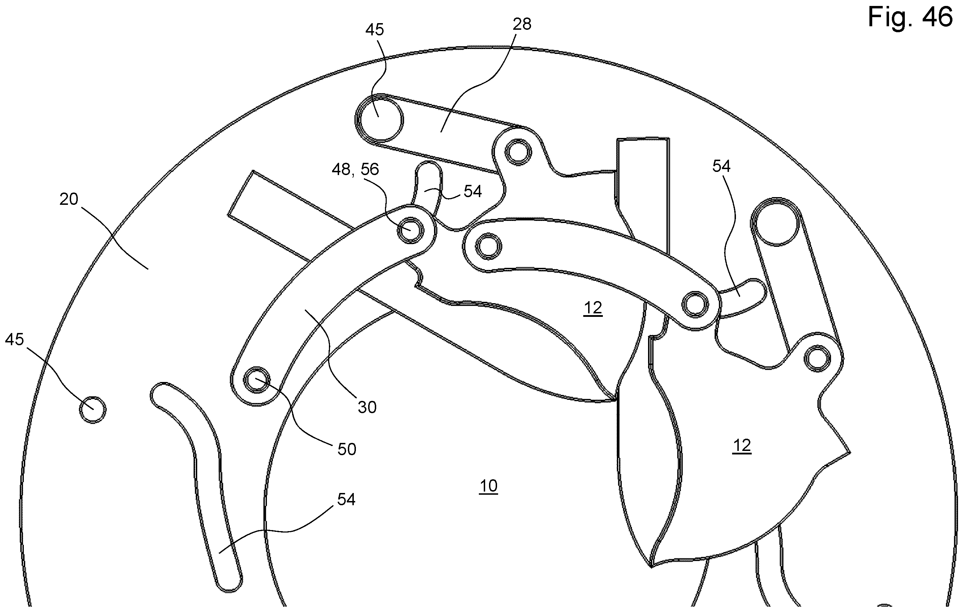

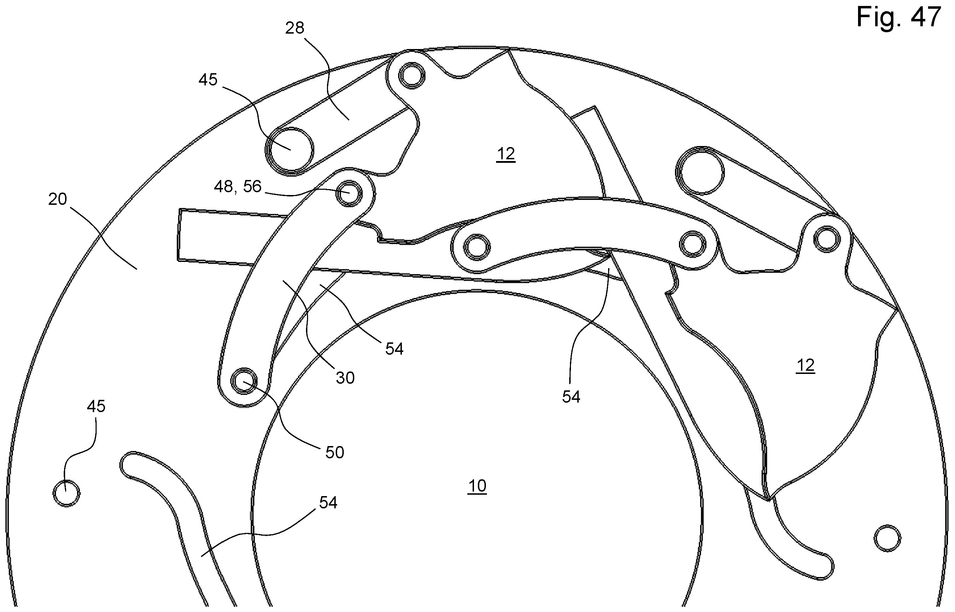

Die Ausführungsform nach den Figuren 44 bis 47 basiert auf der Ausführungsform nach den Figuren 12 bis 15, wobei hier der vorstehende Fortsatz 56 des zweiten Schwenkhebels 30 am zweiten Anlenkpunkt 48 angeordnet ist. Dadurch wird eine kompaktere Bauweise mit weniger Komponenten ermöglicht. Außerdem wurde hier eine andere Form der Segmente 12 und eine auf diese Segmentform abgestimmte Steuerkurve 54 gewählt.

Ansonsten sind auch hier die zweiten Schwenkhebel 30 über jeweils einen zweiten Anlenkpunkt 48 mit ihrem Segment und über ein zweites Schwenklager 50 mit der zweiten Basis 22 verbunden. Dasselbe gilt auch für die ersten Schwenkhebel 28 und ihre ersten Anlenkpunkte 42 sowie die ersten Schwenklager 45, die sie mit der ersten Basis 20 verbinden.

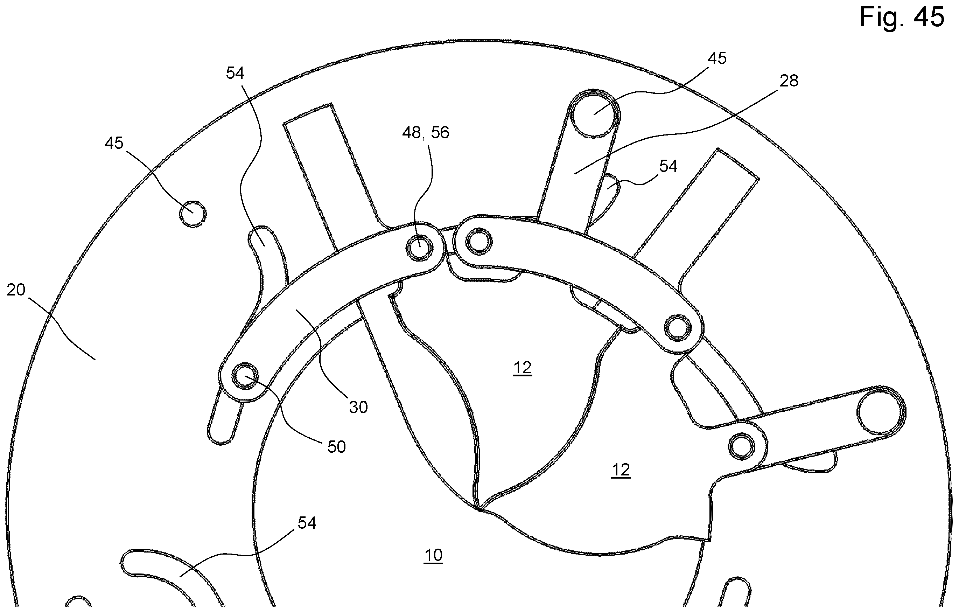

In den Figuren 45 bis 47 sind die Bewegungsabläufe beim Drehen der ersten Basis 20 relativ zur zweiten Basis 22 zu sehen, die zu einem Öffnungsvorgang führen. Für die bessere Übersichtlichkeit wurde die zweite Basis 22 weggelassen.

## Patentansprüche

1. Verschlussmechanismus für eine durch ein Zentrum (14) und einen Außenrand (58) definierte Öffnung (10), mit
- mehreren Segmenten (12), die in einer in das Zentrum (14) gefahrenen Schließstellung gemeinsam die Öffnung (10) verschließen und in einer zum Außenrand (58) verfahrenden Öffnungsstellung gemeinsam die Öffnung (10) freilegen, ersten und zweiten Schwenkhebeln (28, 30) sowie einer ersten und einer zweiten Basis (20, 22), wobei
- jedes Segment (12) ein Mittelteil eines eigenen Viergelenks ist und einen ersten und einen zweiten Anlenkpunkt (42, 48) hat,
- am ersten Anlenkpunkt (42) ein erster Schwenkhebel (28) schwenkbar am zugeordneten Segment (12) angebracht ist, der außerhalb des Außenrandes (58) an der ersten Basis (20) schwenkbar angebracht ist, und
- am zweiten Anlenkpunkt (48) ein zweiter Schwenkhebel (30) am zugeordneten Segment (12) angebracht ist, der über ein Kurvengetriebe mit der ersten Basis (20) beweglich mechanisch gekoppelt ist und der außerhalb des Außenrandes (58) an der zweiten Basis (22) schwenkbar angebracht ist, und
- die erste Basis (20) und die zweite Basis (22) relativ zueinander beweglich sind und die Relativbewegung eine Antriebsbewegung für die Schwenkhebel (28, 30) bildet.

2. Verschlussmechanismus nach Anspruch 1, **dadurch gekennzeichnet, dass** die erste oder die zweite Basis (20, 22) als um das Zentrum (14) beweglicher Ring ausgebildet ist.

3. Verschlussmechanismus nach Anspruch 2, **dadurch gekennzeichnet, dass** der Ring an der anderen Basis geführt ist, insbesondere durch eine zwischen der ersten und der zweiten Basis ausgebildete Drehlagerung (44).

4. Verschlussmechanismus nach Anspruch 3, **dadurch gekennzeichnet, dass** die Drehlagerung (44) durch zumindest eine zwischen der ersten und der zweiten Basis (20, 22) ausgebildete Kulissenführung (38) gebildet ist.

5. Verschlussmechanismus nach einem der vorhergehenden Ansprüche, **dadurch gekennzeichnet, dass** alle ersten Schwenkhebel (28) an der ersten Basis (20) schwenkbar angebracht sind und/oder alle zweiten Schwenkhebel (30) an der zweiten Basis (22) schwenkbar angebracht sind.

6. Verschlussmechanismus nach einem der vorhergehenden Ansprüche, **dadurch gekennzeichnet, dass** alle ersten Schwenkhebel (28) untereinander baugleich oder zumindest in der Hebellänge gleich sind und/oder dass alle zweiten Schwenkhebel (30) untereinander baugleich oder zumindest in der Hebellänge gleich sind.

7. Verschlussmechanismus nach einem der vorhergehenden Ansprüche, **dadurch gekennzeichnet, dass** die ersten und die zweiten Anlenkpunkte (42, 48) jeweils im Bereich eines radial äußeren Umfangsabschnittes des jeweils zugeordneten Segments (12) positioniert sind oder dass einer der Anlenkpunkte (42, 48) im Bereich einer radialen Mittellinie (M) des zugeordneten Segments (12), bezogen auf den geschlossenen Zustand des Verschlussmechanismus liegt.

8. Verschlussmechanismus nach einem der vorhergehenden Ansprüche, **dadurch gekennzeichnet, dass** der erste Schwenkhebel (28) über ein erstes Schwenklager (45) an der ersten Basis (20) angebracht ist und der zweite Schwenkhebel (30) über ein zweites Schwenklager (50) an der zweiten Basis (22) angebracht ist, insbesondere wobei das erste Schwenklager (45) radial weiter außen angeordnet ist als das zweite Schwenklager (50) oder umgekehrt.

9. Verschlussmechanismus nach einem der vorhergehenden Ansprüche, **dadurch gekennzeichnet, dass** in der Schließstellung der erste oder der zweite Schwenkhebel (28, 30) steiler zu einem unmittelbar angrenzenden Außenrandbereich (60) der Öffnung (10) verläuft als der jeweils andere Schwenkhebel (28, 30).

10. Verschlussmechanismus nach einem der vorhergehenden Ansprüche, **dadurch gekennzeichnet, dass** sämtliche Segmente (12) eine plattenförmige, insbesondere im Wesentlichen kreissegmentförmige Gestalt haben und/oder in einer gemeinsamen Ebene liegen.

11. Verschlussmechanismus nach einem der vorhergehenden Ansprüche, **dadurch gekennzeichnet, dass** sämtliche Segmente (12) einen in einer gemeinsamen Ebene liegenden Verschlussabschnitt (81) sowie einen daran angebrachten, abstehenden Rohrsegmentabschnitt (82) haben, wobei sich die Rohrsegmentabschnitte (82) in sämtlichen Stellungen der Segmente (12) zu einem Rohr mit, durch Bewegung der Segmente (12), variablem Querschnitt ergänzen oder in sämtlichen Stellungen zu einem Trichter mit, durch Bewegung der Segmente (12), variablem Querschnitt ergänzen.

12. Verschlussmechanismus nach einem der vorhergehenden Ansprüche, **dadurch gekennzeichnet, dass** das Kurvengetriebe eine Kulissenbahn (54) und/oder eine Stegkurve und/oder eine Kurvenscheibe und/oder ein oder mehrere Abtastelemente aufweist.

13. Verschlussmechanismus nach Anspruch 12, **dadurch gekennzeichnet, dass** am zweiten Schwenkhebel (30) die Kulissenbahn (54) ausgebildet ist, an der ein Fortsatz (56) an der ersten Basis (20) angreift oder in der ersten Basis (20) eine Kulissenbahn (54) ausgebildet ist, an der ein Fortsatz (56) am zweiten Schwenkhebel (30) angreift.

14. Verschlussmechanismus nach einem der vorhergehenden Ansprüche, **dadurch gekennzeichnet, dass** die Segmente (12) zur Abdichtung gegenüber einem unmittelbar benachbarten Segment (12) Dichtungen haben und/oder zumindest abschnittsweise ineinandergreifen.

15. Verschlussmechanismus nach einem der vorhergehenden Ansprüche, **dadurch gekennzeichnet, dass** die Segmente (12) eine solche Form haben und das Viergelenk sowie das Kurvengetriebe so aufeinander abgestimmt sind, dass zwischen unmittelbar benachbarten Segmenten (12) während des Öffnungsvorgangs kein Spalt entsteht.

16. Verschlussmechanismus nach einem der vorhergehenden Ansprüche, **dadurch gekennzeichnet, dass** das Kurvengetriebe so ausgebildet ist, dass beim Öffnungsvorgang der zweite Schwenkhebel (30) zuerst in Richtung Zentrum (14) schwenkt und anschließend nach außen schwenkt.

17. Verschlussmechanismus nach einem der vorhergehenden Ansprüche, **dadurch gekennzeichnet, dass** das Kurvengetriebe so ausgebildet ist, dass zu Beginn des Öffnungsvorgangs die Segmente (12) zuerst eine rein radiale Bewegung nach außen und anschließend eine Schwenkbewegung nach außen ausführen.

18. Verschlussmechanismus nach einem der vorhergehenden Ansprüche, **dadurch gekennzeichnet, dass** die Segmente (12) eine zulaufende Spitze (70) haben, wobei die Spitzen (70) im geschlossenen Zustand im Zentrum (14) zusammentreffen, insbesondere wobei Segmente (12) an ihren den benachbarten Segmenten (12) zugewandten Seitenflächen (16, 18) einen Zentrierfortsatz (124) haben, der seitlich vorsteht und im geschlossenen Zustand in eine vorzugsweise komplementäre Ausnehmung (126) in einer unmittelbar gegenüberliegenden Seitenfläche (16, 18) des benachbarten Segments (12) eindringt und die Segmente (12) mechanisch aneinander arretiert.

19. Verschlussmechanismus nach einem der vorhergehenden Ansprüche, **dadurch gekennzeichnet, dass** zur Schaffung einer Synchronbewegung der ersten oder der zweiten Schwenkhebel (28, 30) die ersten oder die zweiten Schwenkhebel (28, 30) mittels einer von der ersten und der zweiten Basis (20, 22) separaten, mechanischen Koppelungsvorrichtung (74) miteinander verbunden sind.

20. Verschlussmechanismus nach einem der vorhergehenden Ansprüche, **dadurch gekennzeichnet, dass** die Segmente (12) an ihrem äußeren Umfangsrand (71) zumindest an einer axialen Stirnfläche (102) einen vorstehenden Rand (104) haben und sich die Ränder (104) im geschlossenen Zustand des Verschlussmechanismus zu einem geschlossen umlaufenden Ringfortsatz ergänzen, wobei ein Gehäuse (106) mit einem Loch (116) vorgesehen ist, das durch den Verschlussmechanismus geschlossen werden kann und zwischen Gehäuse und Ringfortsatz eine Dichtung vorgesehen ist, um zumindest eine Seite des Verschlussmechanismus gegenüber dem Gehäuse (106) abzudichten.

## Claims

1. Closure mechanism for an opening (10) defined by a centre (14) and an outer edge (58), with
- a plurality of segments (12) which, in a closed position moved into the centre (14), jointly close the opening (10) and, in an open position moved to the outer edge (58), jointly expose the opening (10), first and second pivot levers (28, 30) and a first and a second base (20, 22), wherein
- each segment (12) is a centre part of a separate four-bar linkage and has a first and a second articulation point (42, 48),
- at the first articulation point (42), a first pivot lever (28) is pivotably attached to the associated segment (12), which is pivotably attached outside the outer edge (58) to the first base (20), and
- at the second articulation point (48), a second pivot lever (30) is attached to the associated segment (12), which is movably mechanically coupled to the first base (20) via a cam mechanism and which is pivotably attached to the second base (22) outside the outer edge (58), and
- the first base (20) and the second base (22) are movable relative to each other and the relative movement forms a drive movement for the pivot levers (28, 30).

2. Closure mechanism according to Claim 1, **characterized in that** the first or the second base (20, 22) is formed as a ring movable around the centre (14).

3. Closure mechanism according to Claim 2, **characterized in that** the ring is guided on the other base, in particular by a pivot bearing (44) formed between the first and the second base.

4. Closure mechanism according to Claim 3, **characterized in that** the pivot bearing (44) is formed by at least one slotted guide (38) formed between the first and the second base (20, 22).

5. Closure mechanism according to any one of the preceding claims, **characterized in that** all first pivot levers (28) are pivotably attached to the first base (20) and/or all the second pivot levers (30) are pivotably attached to the second base (22).

6. Closure mechanism according to any one of the preceding claims, **characterized in that** all the first pivot levers (28) are structurally identical to one another or at least the same in lever length and/or that all second pivot levers (30) are structurally identical to one another or at least the same in lever length.

7. Closure mechanism according to any one of the preceding claims, **characterized in that** the first and the second articulation points (42, 48) are each positioned in the region of a radially outer circumferential portion of the respectively associated segment (12) or that one of the articulation points (42, 48) is located in the region of a radial centre line (M) of the associated segment (12), relative to the closed state of the closure mechanism.

8. Closure mechanism according to any one of the preceding claims, **characterized in that** the first pivot lever (28) is attached to the first base (20) via a first pivot bearing (45) and the second pivot lever (30) is attached to the second base (22) via a second pivot bearing (50), in particular wherein the first pivot bearing (45) is arranged radially further outwards than the second pivot bearing (50) or vice versa.

9. Closure mechanism according to any one of the preceding claims, **characterized in that**, in the closed position, the first or the second pivot lever (28, 30) extends more steeply to an immediately adjacent outer edge region (60) of the opening (10) than the other pivot lever (28, 30).

10. Closure mechanism according to any one of the preceding claims, **characterized in that** all segments (12) have a plate-shaped, in particular substantially circular segment-shaped configuration and/or lie in a common plane.

11. Closure mechanism according to any one of the preceding claims, **characterized in that** all segments (12) have a closure portion (81) lying in a common plane and a protruding tube segment portion (82) attached thereto, wherein the tube segment portions (82) complement each other in all positions of the segments (12) to form a tube with a variable cross-section by moving the segments (12) or complement each other in all positions to form a funnel with a variable cross-section by moving the segments (12).

12. Closure mechanism according to any one of the preceding claims, **characterized in that** the cam mechanism has a slide track (54) and/or a web cam and/or a cam disc and/or one or more sensing elements.

13. Closure mechanism according to Claim 12, **characterized in that** the slide track (54) is formed on the second pivot lever (30), on which slide track (54) a projection (56) engages on the first base (20), or a slide track (54) is formed in the first base (20), on which a projection (56) engages on the second pivot lever (30).

14. Closure mechanism according to any one of the preceding claims, **characterized in that** the segments (12) have seals for sealing with respect to an immediately adjacent segment (12) and/or interlock at least in portions.

15. Closure mechanism according to any one of the preceding claims, **characterized in that** the segments (12) have such a shape and the four-bar linkage and the cam mechanism are coordinated with one another in such a way that no gap is formed between immediately adjacent segments (12) during the opening process.

16. Closure mechanism according to one of the preceding claims, **characterized in that** the cam mechanism is formed such that during the opening process the second pivot lever (30) first pivots in the direction of the centre (14) and then pivots outwards.

17. Closure mechanism according to any one of the preceding claims, **characterized in that** the cam mechanism is formed such that at the beginning of the opening process the segments (12) first perform a purely radial outwards movement and then a pivoting movement outwards.

18. Closure mechanism according to any one of the preceding claims, **characterized in that** the segments (12) have a tapered tip (70), wherein the tips (70) meet in the centre (14) in the closed state, in particular wherein segments (12) have a centring extension (124) on their side surfaces (16, 18) facing the adjacent segments (12), which protrudes laterally and, in the closed state, penetrates into a preferably complementary recess (126) in a directly opposite side surface (16, 18) of the adjacent segment (12) and mechanically locks the segments (12) to one another.

19. Closure mechanism according to any one of the preceding claims, **characterized in that**, in order to create a synchronous movement of the first or the second pivot levers (28, 30), the first or the second pivot levers (28, 30) are connected to one another by means of a mechanical coupling device (74) separate from the first and the second base (20, 22).

20. Closure mechanism according to any one of the preceding claims, **characterized in that** the segments (12) have a projecting edge (104) on their outer circumferential edge (71) at least on one axial end face (102) and the edges (104) complement each other in the closed state of the closure mechanism to form a closed circumferential annular extension, wherein a housing (106) is provided with a hole (116) which can be closed by the closure mechanism and a seal is provided between the housing and the annular extension in order to seal at least one side of the closure mechanism with respect to the housing (106).

## Revendications

1. Mécanisme de fermeture pour une ouverture (10) délimitée par un centre (14) et un bord extérieur (58), comprenant
- de multiples segments (12) qui, dans une position de fermeture déplacée vers le centre (14), ferment tous ensemble l'ouverture (10) et, dans une position d'ouverture déplacée vers le bord extérieur (58), dégagent tous ensemble l'ouverture (10), de premiers et seconds leviers de pivotement (28, 30) ainsi qu'une première et une seconde base (20, 22), dans lequel
- chaque segment (12) est une partie médiane d'une liaison à quatre barres propre et possède un premier et un second point d'articulation (42, 48),
- au premier point d'articulation (42), un premier levier de pivotement (28) est fixé de manière pivotante au segment (12) associé, lequel est fixé de manière pivotante à la première base (20) à l'extérieur du bord extérieur (58), et
- au second point d'articulation (48), un second levier de pivotement (30) est fixé au segment (12) associé, lequel est accouplé mécaniquement de manière mobile à la première base (20) par l'intermédiaire d'un engrenage à cames et lequel est fixé de manière pivotante à la seconde base (22) à l'extérieur du bord extérieur (58), et
- la première base (20) et la seconde base (22) sont mobiles l'une par rapport à l'autre et le mouvement relatif crée un mouvement d'entraînement pour les leviers de pivotement (28, 30).

2. Mécanisme de fermeture selon la revendication 1, **caractérisé en ce que** la première ou la seconde base (20, 22) est conçue sous la forme d'un anneau mobile autour du centre (14).

3. Mécanisme de fermeture selon la revendication 2, **caractérisé en ce que** l'anneau est guidé sur l'autre base, notamment par une articulation rotative (44) formée entre la première et la seconde base.

4. Mécanisme de fermeture selon la revendication 3, **caractérisé en ce que** l'articulation rotative (44) est formée par au moins un guidage à coulisse (38) formé entre la première et la seconde base (20, 22).

5. Mécanisme de fermeture selon l'une des revendications précédentes, **caractérisé en ce que** tous les premiers leviers de pivotement (28) sont fixés de manière pivotante à la première base (20) et/ou tous les seconds leviers de pivotement (30) sont fixés de manière pivotante à la seconde base (22).

6. Mécanisme de fermeture selon l'une des revendications précédentes, **caractérisé en ce que** tous les premiers leviers de pivotement (28) sont de conception identique ou au moins de même longueur de levier les uns par rapport aux autres et/ou **en ce que** tous les seconds leviers de pivotement (30) sont de conception identique ou au moins de même longueur de levier les uns par rapport aux autres.

7. Mécanisme de fermeture selon l'une des revendications précédentes, **caractérisé en ce que** les premiers et les seconds points d'articulation (42, 48) sont respectivement positionnés dans la zone d'une section circonférentielle radialement extérieure du segment (12) respectivement associé, ou **en ce que** l'un des points d'articulation (42, 48) se situe dans la zone d'une ligne médiane radiale (M) du segment (12) associé, par rapport à l'état fermé du mécanisme de fermeture.

8. Mécanisme de fermeture selon l'une des revendications précédentes, **caractérisé en ce que** le premier levier de pivotement (28) est fixé à la première base (20) par l'intermédiaire d'un premier palier pivotant (45) et le second levier de pivotement (30) est fixé à la seconde base (22) par l'intermédiaire d'un second palier pivotant (50), le premier palier pivotant (45) étant en particulier agencé radialement plus à l'extérieur que le second palier pivotant (50) ou inversement.

9. Mécanisme de fermeture selon l'une des revendications précédentes, **caractérisé en ce que**, dans la position de fermeture, le premier ou le second levier de pivotement (28, 30) s'étend plus abruptement vers une zone de bord extérieur (60) directement adjacente de l'ouverture (10) que l'autre levier de pivotement (28, 30) respectif.

10. Mécanisme de fermeture selon l'une quelconque des revendications précédentes, **caractérisé en ce que** tous les segments (12) présentent une forme de plaque, en particulier sensiblement la forme d'un segment de cercle, et/ou se situent dans un plan commun.

11. Mécanisme de fermeture selon l'une des revendications précédentes, **caractérisé en ce que** tous les segments (12) possèdent une section de fermeture (81) située dans un plan commun ainsi qu'une section de segment tubulaire (82) qui y est fixée et fait saillie, les sections de segment tubulaires (82) se complétant dans toutes les positions des segments (12) pour former un tube présentant une section transversale variable lors du mouvement des segments (12) ou se complétant dans toutes les positions pour former un entonnoir présentant une section transversale variable lors du mouvement des segments (12).

12. Mécanisme de fermeture selon l'une des revendications précédentes, **caractérisé en ce que** l'engrenage à cames présente un chemin de came (54) et/ou une came à rainure et/ou une came à disque et/ou un ou plusieurs éléments de détection.

13. Mécanisme de fermeture selon la revendication 12, **caractérisé en ce que** le chemin de came (54) est formé sur le second levier de pivotement (30), sur lequel agit un prolongement (56) sur la première base (20), ou **en ce qu'**un chemin de came (54) est formé dans la première base (20), sur lequel agit un prolongement (56) sur le second levier de pivotement (30).

14. Mécanisme de fermeture selon l'une des revendications précédentes, **caractérisé en ce que** les segments (12) présentent des joints assurant l'étanchéité par rapport à un segment (12) directement adjacent et/ou s'emboîtent au moins par sections.

15. Mécanisme de fermeture selon l'une des revendications précédentes, **caractérisé en ce que** les segments (12) présentent une forme telle et la liaison à quatre barres ainsi que l'engrenage à cames sont coordonnés de telle manière qu'aucun espace ne se forme entre les segments (12) directement adjacents pendant le processus d'ouverture.

16. Mécanisme de fermeture selon l'une des revendications précédentes, **caractérisé en ce que** l'engrenage à cames est conçu de telle manière que, lors du processus d'ouverture, le second levier de pivotement (30) pivote d'abord en direction du centre (14) puis pivote vers l'extérieur.

17. Mécanisme de fermeture selon l'une des revendications précédentes, **caractérisé en ce que** l'engrenage à cames est conçu de telle manière qu'au début du processus d'ouverture, les segments (12) effectuent d'abord un mouvement purement radial vers l'extérieur, puis un mouvement de pivotement vers l'extérieur.

18. Mécanisme de fermeture selon l'une des revendications précédentes, **caractérisé en ce que** les segments (12) présentent une pointe effilée (70), les pointes (70) se rejoignant dans l'état fermé au centre (14), notamment les segments (12) présentant, sur leurs surfaces latérales (16, 18) tournées vers les segments (12) adjacents, un prolongement de centrage (124) qui dépasse latéralement et, dans l'état fermé, pénètre dans un évidement (126) de préférence complémentaire dans une surface latérale (16, 18) directement opposée du segment (12) adjacent et verrouille mécaniquement les segments (12) entre eux.

19. Mécanisme de fermeture selon l'une des revendications précédentes, **caractérisé en ce que**, pour créer un mouvement synchrone des premiers ou des seconds leviers de pivotement (28, 30), les premiers ou les seconds leviers de pivotement (28, 30) sont reliés les uns aux autres au moyen d'un dispositif d'accouplement mécanique (74) séparé de la première et de la seconde base (20, 22).

20. Mécanisme de fermeture selon l'une des revendications précédentes, **caractérisé en ce que** les segments (12) présentent, sur leur bord périphérique extérieur (71), au moins sur une face avant axiale (102), un bord saillant (104), et **en ce que** les bords (104), dans l'état fermé du mécanisme de fermeture, se complètent pour former un prolongement annulaire fermé, un boîtier (106) présentant un orifice (116) étant prévu, lequel peut être fermé par le mécanisme de fermeture, et un joint étant prévu entre le boîtier et le prolongement annulaire pour fermer hermétiquement par rapport au boîtier (106) au moins un côté du mécanisme de fermeture.
